# EUROPÄISCHE PATENTSCHRIFT

(11) **EP 2 992 310 B1**
(45) Veröffentlichungstag und Bekanntmachung des Hinweises auf die Patenterteilung: **31.07.2019**
(21) Anmeldenummer: 14721826.7
(22) Anmeldetag: 30.04.2014
(51) Int. Cl.: G01M 11/02, G01B 11/24, G01B 21/04

(54) **VERFAHREN UND SYSTEM FÜR DAS ERMITTELN DER RÄUMLICHEN STRUKTUR EINES GEGENSTANDS**
METHOD AND SYSTEM FOR DETERMINING THE SPATIAL STRUCTURE OF AN OBJECT
PROCÉDÉ ET SYSTÈME POUR DÉTERMINER LA STRUCTURE SPATIALE D'UN OBJET

(30) Priorität: 02.05.2013 DE 102013208090; 02.05.2013 DE 102013208091; 30.09.2013 DE 102013219838
(43) Veröffentlichungstag der Anmeldung: 09.03.2016
(73) Patentinhaber: Carl Zeiss Vision International GmbH, 73430 Aalen (DE); Carl Zeiss AG, 73447 Oberkochen (DE)
(72) Erfinder: GLASENAPP, Carsten, 73447 Oberkochen (DE); HORNAUER, Matthias, 73466 Lauchheim-Hülen (DE); HANSSEN, Adalbert, 73434 Aalen (DE); SCHLEITZER, Yvonne, 07743 Jena (DE); OMLOR, Lars, 73431 Aalen (DE)
(74) Vertreter: Pfiz/Gauss Patentanwälte PartmbB
(86) Internationale Anmeldenummer: PCT/EP2014/058859
(87) Internationale Veröffentlichungsnummer: WO 2014/177632

(56) Entgegenhaltungen:
- EP-A1- 2 090 861
- EP-A1- 2 194 367
- EP-A1- 2 228 623
- EP-A2- 2 261 629
- WO-A1-00/31500
- WO-A1-2007/018118
- DE-T2- 60 132 551
- JP-A- 2001 227 908
- JP-A- 2010 008 193
- JP-A- 2010 236 998
- US-A1- 2005 174 566
- US-A1- 2012 133 957

## Beschreibung

Die Erfindung betrifft ein Verfahren für das Ermitteln der räumlichen Struktur eines Gegenstands, insbesondere einer Linse, z. B. eines Brillenglases, eines Brillenglasrohlings oder eines Brillenglashalbfabrikats, der eine erste optisch wirksame Fläche und eine zweite optisch wirksame Fläche hat.

Darüber hinaus betrifft die Erfindung auch ein System für das Ermitteln der räumlichen Struktur eines Gegenstands, insbesondere einer Linse, z. B. eines Brillenglases, eines Brillenglasrohlings oder eines Brillenglashalbfabrikats mit einem derartigen Verfahren.

Unter einer Linse ist vorliegend ein Glas- oder Kunststoffkörper zu verstehen, der zwei optisch wirksame, d. h. das Licht brechende Flächen hat, die einander gegenüber liegen. Eine Linse im Sinne der Erfindung ist insbesondere ein Brillenglas, das für das Einsetzen in eine Brillenfassung ausgelegt ist. Der Begriff Linse erstreckt sich vorliegend auch auf sogenannte Brillenglas-Rohlinge, d. h. ein üblicherweise vorgeformtes Materialstück zur Herstellung einer Linse in irgendeinem Zustand vor der Beendigung der Oberflächenbearbeitung, sowie auf sogenannte Halbfabrikate in Form eines Linsenrohlings mit nur einer optisch fertig bearbeiteten Fläche. Solche Halbfabrikate werden auch als Brillenglas-Halbfertigprodukte bezeichnet.

Um die räumliche Struktur von Gegenständen zu ermitteln, ist es z. B. bekannt, die Gegenstände in einer Koordinatenmessmaschine mit einem Messfühler abzutasten. Damit sich die räumliche Struktur eines Gegenstands punktgenau und mit hoher Genauigkeit auf diese Weise bestimmen lässt, ist es erforderlich, mit dem Messfühler an der Oberfläche des Gegenstands eine möglichst große Anzahl von Messpunkten aufzunehmen.

Für die Qualitätskontrolle von Brillengläsern in einer BrillenglasFertigungseinrichtung werden deshalb verbreitet Messverfahren eingesetzt, die ein Brillenglas nur an wenigen Stellen vermessen. Um die räumliche Struktur und die optischen Eigenschaften von Brillengläsern zu bestimmen, werden diese häufig mit sogenannten Scheitelbrechwertmessgeräten untersucht, in denen die optische Wirkung der Brillenglaser in einer Anordnung vermessen wird, in der das Brillenglas mit Licht durchsetzt wird (Transmissionsmessung).

Die EP 2 228 623 A1 und die JP 2001-227908 A beschreiben das Bestimmen der Topografie zweier einander gegenüberliegender Oberflächen eines Gegenstands, indem der Abstand dieser Flächen mittels eines interferometrischen Messverfahrens an einer Vielzahl von Messpunkten aufeinanderfolgend ermittelt wird. Die EP 2 090 861 A1 offenbart das Vermessen von Flächen mittels eines berührenden Tasters. Aus der WO 2007/018118 A1, EP 2 261 629 A2, US 2005/0174566 A1 und JP 2010-008193 A ist das Erfassen von unerwünschten Exzentrizitäten von zwei einander gegenüberliegenden, optisch wirksamen Flächen einer Linse durch Abtasten der Linse mit einem Laserlichtstrahl bekannt.

Aufgabe der Erfindung ist es, ein Verfahren bereitzustellen und ein System zu schaffen, mit dem sich die räumliche Struktur eines Gegenstands mit einer ersten und einer zweiten optisch wirksamen Fläche in kurzer Zeit und mit hoher Genauigkeit ermitteln lässt.

Diese Aufgabe wird durch ein Verfahren mit den Merkmalen des Anspruchs 1 und ein System mit den Merkmalen des Anspruchs 7 gelöst.

Vorteilhafte Weiterbildungen der Erfindung sind in den Unteransprüchen angegeben.

Im Sinne der Erfindung wird unter einer optisch wirksamen Fläche eines Gegenstands eine Fläche verstanden, die Lichtstrahlen im sichtbaren oder auch unsichtbaren Spektralbereich zumindest teilweise gerichtet reflektiert. Im Sinne der Erfindung werden unter einer optisch wirksamen Fläche insbesondere die das Licht brechenden Flächen von einem Brillenglas verstanden. Zu bemerken ist dabei, dass optisch wirksame Flächen im Sinne dieser Erfindung für das Licht sowohl transparent als auch spiegelnd sein können.

Erfindungsgemäß wird für das Ermitteln der räumlichen Struktur eines Gegenstands, insbesondere einer Linse, z. B. eines Brillenglases, eines Brillenglasrohlings oder eines Brillenglashalbfabrikats, der eine erste solchermaßen optisch wirksame Fläche und eine zweite solchermaßen optisch wirksame Fläche hat, der Gegenstand in einer Halteeinrichtung angeordnet. In dieser Halteeinrichtung wird dann die Lage von wenigstens einem, vorzugsweise die Lage von wenigstens drei Punkten auf der ersten optisch wirksamen Fläche und die Lage von wenigstens einem, vorzugsweise die Lage von wenigstens drei Punkten auf der zweiten optisch wirksamen Fläche in einem zu der Halteeinrichtung ortsfesten Koordinatensystem referenziert, d. h. ermittelt.

Die Topographie der ersten optisch wirksamen Fläche des Gegenstands wird dann anhand der Lage des wenigstens einen Punkts, vorzugsweise anhand der Lage der wenigstens drei Punkte auf der ersten optisch wirksamen Fläche in einem zu der Halteeinrichtung referenzierten Koordinatensystem bestimmt.

Die räumliche Struktur des Gegenstands wird schließlich aus der Topografie der ersten optisch wirksamen Fläche und aus einem Datensatz über die Topografie der zweiten optisch wirksamen Fläche berechnet, der zu dem ortsfesten Koordinatensystem der Halteeinrichtung anhand der Lage des wenigstens einen Punkts auf der zweiten optisch wirksamen Fläche, vorzugsweise anhand der Lage der wenigstens drei Punkte auf der zweiten optisch wirksamen Fläche referenziert ist.

Um die Topografie der ersten optisch wirksamen Fläche zu bestimmen, kann die Topografie dieser Fläche z. B. mit einem Topografie-Messverfahren vermessen werden. Es ist aber auch möglich, für das Bestimmen der Topografie dieser Fläche einen bekannten Datensatz aus einem Datenspeicher mit Informationen über diese Fläche auszuwerten.

Um die Topografie der ersten optisch wirksamen Fläche durch Vermessen zu bestimmen, kann z. B. Licht aus einer Punktlichtquelle, vorzugsweise aus einer Vielzahl von Punktlichtquellen bereitgestellt werden, das an der ersten optisch wirksamen Fläche reflektiert wird, und eine erste Helligkeitsverteilung erfasst werden, die von dem an der ersten optisch wirksamen Fläche reflektierten Licht der Punktlichtquellen auf einem Bildsensor hervorgerufen wird. Die Topographie der ersten optisch wirksamen Fläche kann dann aus der Lage des wenigstens einen Punkts, vorzugsweise aus der Lage der wenigstens drei Punkte auf der ersten optisch wirksamen Fläche des Gegenstands und aus der erfassten ersten Helligkeitsverteilung in einem zu der Halteeinrichtung referenzierten Koordinatensystem berechnet werden. Dann wird die räumliche Struktur des Gegenstands aus der in einem zu der Halteeinrichtung ortsfesten Koordinatensystem referenzierten Lage von dem wenigstens einen Punkt, vorzugsweise aus der Lage der wenigstens drei bekannten Punkte auf der ersten und der zweiten optisch wirksamen Fläche und aus der berechneten Topographie der ersten optisch wirksamen Fläche und einem zu dem ortsfesten Koordinatensystem der Halteeinrichtung referenzierten Datensatz über die Topographie der zweiten optisch wirksamen Fläche berechnet.

Zu bemerken ist allerdings, dass die Topografie dieser Fläche alternativ hierzu z. B. auch mittels punktbasierter oder linienbasierter Deflektometrie, durch Untersuchung in konfokalen, insbesondere chromatisch konfokalen Systemen, mittels Interferometrie, insbesondere mittels Weißlichtinterferometrie, mittels Computertomographie (CT) unter Verwendung von sichtbarem Licht oder unter Verwendung von Röntgenstrahlen, mittels Triangulation oder auch in einem taktilen Messverfahren, etwa in einer Koordinatenmessmaschine bestimmt werden kann.

Der Datensatz über die Topografie der zweiten optisch wirksamen Fläche kann z. B. ein Soll-Datensatz für diese Fläche oder auch ein Datensatz mit Messdaten über die Topografie dieser Fläche sein. Auch dieser Datensatz kann z. B. mit einem vorstehend angegebenen Topografie-Messverfahren ermittelt werden. Insbesondere ist es möglich, den zu dem ortsfesten Koordinatensystem referenzierten Datensatz über die Topografie der zweiten optisch wirksamen Fläche zu bestimmen, indem Licht aus einer Vielzahl von Punktlichtquellen bereitgestellt wird, das an der zweiten optisch wirksamen Fläche reflektiert wird, indem eine Helligkeitsverteilung erfasst wird, die von dem an der zweiten optisch wirksamen Fläche reflektierten Licht der Punktlichtquellen auf einem Bildsensor hervorgerufen wird, und indem die Topografie der zweiten optisch wirksamen Fläche aus der Lage des wenigstens einen Punkts, vorzugsweise aus der Lage der wenigstens drei Punkte auf der zweiten optisch wirksamen Fläche des Gegenstands und aus der erfassten Helligkeitsverteilung in dem zu der Halteeinrichtung ortsfesten Koordinatensystem berechnet wird.

Unter der in einem Koordinatensystem referenzierten Lage von einem Punkt wird dabei vorliegend verstanden, dass für den Punkt die Koordinaten der Lage in dem Koordinatensystem bekannt sind.

Um die orts- und richtungsabhängige optische Wirkung eines Gegenstands zu ermitteln, insbesondere eines Brillenglases, eines Brillenglasrohlings oder eines Brillenglashalbfabrikats, der eine erste optisch wirksame Fläche und eine zweite optisch wirksame Fläche hat, wird die räumliche Struktur des Gegenstands mit dem vorstehend beschriebenen Verfahren ermittelt und dann die orts- und richtungsabhängige optische Wirkung des Gegenstands, d. h. dessen optische Übertragungsfunktion aus der ermittelten räumlichen Struktur und insbesondere unter Berücksichtigung der Brechzahl und/oder der Reflexionseigenschaften mit einem Raytracing-Verfahren berechnet.

Unter einem Raytracing-Verfahren wird dabei vorliegend ein Verfahren für das Ermitteln der optischen Übertragungsfunktion von einem Gegenstand verstanden, bei dem für eine Vielzahl von vorgegebenen Lichtstrahlen, die von einem Objektgegenstand ausgehen und die auf den Gegenstand auftreffen, die Ablenkung dieser Lichtstrahlen aufgrund der räumlichen Struktur und der physikalischen Eigenschaften des Gegenstands berechnet wird.

Auch der zu dem ortsfesten Koordinatensystem referenzierte Datensatz über die Topographie der zweiten optisch wirksamen Fläche kann bestimmt werden, indem Licht aus einer Vielzahl von Punktlichtquellen bereitgestellt wird, das an der zweiten optisch wirksamen Fläche reflektiert wird, indem eine zweite Helligkeitsverteilung erfasst wird, die von dem an der zweiten optisch wirksamen Fläche reflektierten Licht der Punktlichtquellen auf einem Bildsensor hervorgerufen wird, und indem die Topographie der zweiten optisch wirksamen Fläche aus der Lage wenigstens eines der drei Punkte auf der zweiten optisch wirksamen Fläche des Gegenstands und aus der erfassten zweiten Helligkeitsverteilung in dem zu der Halteeinrichtung ortsfesten Koordinatensystem berechnet wird.

Für das Angeben der räumlichen Struktur des Gegenstands in einem gegenstandsfesten Koordinatensystem wird das zu der Halteeinrichtung ortsfeste Koordinatensystem bevorzugt zu einem gegenstandsfesten Koordinatensystem referenziert.

Hierzu kann das zu der Halteeinrichtung ortsfeste Koordinatensystem z. B. durch Bestimmen der Lage einer auf dem Gegenstand angebrachten Markierung in dem ortsfesten Koordinatensystem zu dem gegenstandsfesten Koordinatensystem referenziert werden.

Eine Idee der Erfindung ist es auch, die Lage von wenigstens einem der bekannten Punkte auf der ersten optisch wirksamen Fläche oder auf der zweiten optisch wirksamen Fläche in einem zu der Halteeinrichtung ortsfesten Koordinatensystem durch eine Dickenmessung des Gegenstands zu bestimmen. Insbesondere ist es eine Idee der Erfindung, für das Referenzieren der Lage von wenigstens einem der bekannten Punkte auf der ersten optisch wirksamen Fläche oder der zweiten optisch wirksamen Fläche in einem zu der Halteeinrichtung ortsfesten Koordinatensystem den Gegenstand mit einer Abstandsmesseinrichtung gegenüber der Halteeinrichtung zu vermessen. Für das Referenzieren der Lage von wenigstens einem der bekannten Punkte auf der ersten optisch wirksamen Fläche oder der zweiten optisch wirksamen Fläche in einem zu der Halteeinrichtung ortsfesten Koordinatensystem ist es allerdings auch möglich, dass der Gegenstand an dem wenigstens einen Punkt an einer Kugelauflage in der Halteeinrichtung aufgenommen wird.

Ein erfindungsgemäßes System für das Ermitteln der räumlichen Struktur eines Gegenstands, insbesondere einer Linse, z. B. eines Brillenglases, eines Brillenglasrohlings oder eines Brillenglashalbfabrikats, der eine erste optisch wirksame Fläche und eine zweite optisch wirksame Fläche hat, enthält wenigstens eine Messstation für das Vermessen der Topographie und/oder des Gradienten und/oder der Krümmung der ersten und/oder der zweiten optisch wirksamen Fläche des Gegenstands. Das System weist auch eine Halteeinrichtung zum Anordnen des Gegenstands in einem Aufnahmebereich der wenigstens einen Messstation auf, in der die Lage von wenigstens einem, besser drei Punkten auf der ersten optisch wirksamen Fläche und von wenigstens einem, besser drei Punkten auf der zweiten optisch wirksamen Fläche des Gegenstands in einem zu der Halteeinrichtung ortsfesten Koordinatensystem ermittelbar ist. Dabei gibt es in der Messstation eine Vielzahl von Punktlichtquellen, die Licht bereitstellen, das an der zu vermessenden optisch wirksamen Fläche eines in dem Aufnahmebereich angeordneten Gegenstands reflektiert wird. Die Messstation enthält dabei wenigstens eine Kamera für das Erfassen einer Helligkeitsverteilung, die von dem an der zu vermessenden optisch wirksamen Fläche reflektierten Licht der Punktlichtquellen auf einem Bildsensor hervorgerufen wird. Die Punktlichtquellen der Messstation sind bevorzugt auf der Mantelfläche eines Polyeders angeordnet.

Eine Idee der Erfindung ist es auch, in der Messstation zwischen der Kamera und dem Aufnahmebereich eine Optikbaugruppe positiver oder negativer Brechkraft anzuordnen, die dazu dient, das Licht der Punktlichtquellen zu einem in dem Aufnahmebereich angeordneten Gegenstand zu lenken und das an dem Gegenstand reflektierte Licht der Kamera zuzuführen.

Die Halteeinrichtung kann den zu vermessenden Gegenstand außerhalb der ersten und/oder zweiten optisch wirksamen Fläche halten oder den zu vermessenden Gegenstand an wenigstens einem Punkt, vorzugsweise an drei Punkten auf der ersten und/oder der zweiten optisch wirksamen Fläche abstützen.

Bevorzugt ist die Halteeinrichtung mit einem darin aufgenommenen Gegenstand in der Messstation in einer ersten Position anordenbar, in der die erste optisch wirksame Fläche des Gegenstands zu der Kamera weist, und in einer von der ersten Position verschiedenen zweiten Position, in der die erste optisch wirksame Fläche des Gegenstands von der Kamera abgewandt ist.

Das System kann Mittel für das Referenzieren eines zu der Halteeinrichtung ortsfesten Koordinatensystems zu einem Koordinatensystem enthalten, das zu der Messstation ortsfest ist. Insbesondere kann das System eine Messstation mit einer Kamera für das Erfassen der Lage einer auf dem Gegenstand angeordneten Markierung in einem zu der Messstation ortsfesten Koordinatensystem umfassen. Das System kann auch eine Messstation mit wenigstens einer Messeinrichtung für das Erfassen der Lage von Punkten auf einer optisch wirksamen Fläche des Gegenstands in einem zu der Messstation ortsfesten Koordinatensystem enthalten.

Insbesondere kann das System auch eine Rechnereinheit umfassen, die ein Computerprogramm enthält, das aus der Topografie der ersten optisch wirksamen Fläche und aus dem Datensatz über die Topografie der zweiten optisch wirksamen Fläche unter Berücksichtigung einer Brechzahl des Gegenstands eine orts- und/oder richtungsabhängige optische Wirkung des Gegenstands berechnet.

Bevorzugt gibt es in dem System eine Verlagerungseinheit für das Zuführen von einem zu vermessenden Gegenstand in eine Messstation und für das Abtransportieren von einem in der Messstation vermessenen Gegenstand. Bevorzugt ist diese Verlagerungseinheit ein Industrieroboter, d. h. ein Bewegungsautomat mit mehreren Achsen, dessen Bewegungen hinsichtlich Bewegungsfolge und Wegen bzw. Winkeln frei, d. h. ohne mechanischen Eingriff programmierbar und vorzugsweise sensorgeführt sind. Für das Aufnehmen von einem zu vermessenden Gegenstand hat die Verlagerungseinheit Greifer.

Die Erfindung erstreckt sich auch auf ein System mit einer Rechnereinheit für das Vergleichen einer für einen Gegenstand ermittelten Struktur oder einer für einen Gegenstand ermittelten optischen Wirkung mit Sollwerten.

Eine Idee der Erfindung ist es insbesondere, ein solches System für die Qualitätsüberwachung in einer Brillenglasfertigungseinrichtung einzusetzen, mit der die Abweichung der räumlichen Struktur von Brillengläsern von einem Sollwert verglichen wird.

Im Folgenden wird die Erfindung anhand der in der Zeichnung in schematischer Weise dargestellten Ausführungsbeispiele näher erläutert.

Es zeigen:
- Fig. 1: ein System für das Ermitteln der räumlichen Struktur eines Brillenglases mit einer Halteeinrichtung und unterschiedlichen Messstationen;
- Fig. 2: die Halteeinrichtung als Schnitt in dem System der Fig. 1 entlang der Linie II - II;
- Fig. 3a: eine Messstation für das Bestimmen der Topografie einer optisch wirksamen Fläche eines Brillenglases in dem System der Fig. 1 mit einer in einer ersten Messposition angeordneten Halteeinrichtung;
- Fig. 3b: die Messstation für das Bestimmen der Topografie einer optisch wirksamen Fläche eines Brillenglases in dem System der Fig. 1 mit einer in einer zweiten Messposition angeordneten Halteeinrichtung;
- Fig. 4: eine weitere, alternativ aufgebaute Messstation für das Referenzieren von zwei zu den optisch wirksamen Flächen eines Brillenglases ortsfesten Koordinatensystemen;
- Fig. 5: eine weitere, alternativ aufgebaute Halteeinrichtung für den Einsatz in einem System für das Ermitteln der räumlichen Struktur eines Brillenglases;
- Fig. 6a: eine weitere, alternativ aufgebaute Messstation für das Bestimmen der Topografie einer optisch wirksamen Fläche eines Brillenglases und das Referenzieren von zwei zu den optisch wirksamen Flächen eines Brillenglases ortsfesten Koordinatensystemen in einem System für das Ermitteln der räumlichen Struktur eines Brillenglases, wobei sich das Brillenglas in einer ersten Messposition befindet;
- Fig. 6b: die Messstation der Fig. 6a, wenn das Brillenglas in einer zweiten Messposition angeordnet ist;
- Fig. 7: eine weitere, alternativ aufgebaute Messstation für das Bestimmen der Topografie einer optisch wirksamen Fläche eines Brillenglases und das Referenzieren von zwei zu den optisch wirksamen Flächen eines Brillenglases ortsfesten Koordinatensystemen in einem System für das Ermitteln der räumlichen Struktur eines Brillenglases;
- Fig. 8 und Fig. 9: jeweils weitere Messstationen für das Bestimmen der Topografie einer optisch wirksamen Fläche eines Brillenglases und das Referenzieren von zwei zu den optisch wirksamen Flächen eines Brillenglases ortsfesten Koordinatensystemen in einem System für das Ermitteln der räumlichen Struktur eines Brillenglases; sowie
- Fig. 10: ein System für das Ermitteln der orts- und richtungsabhängigen optischen Wirkung eines Brillenglases.

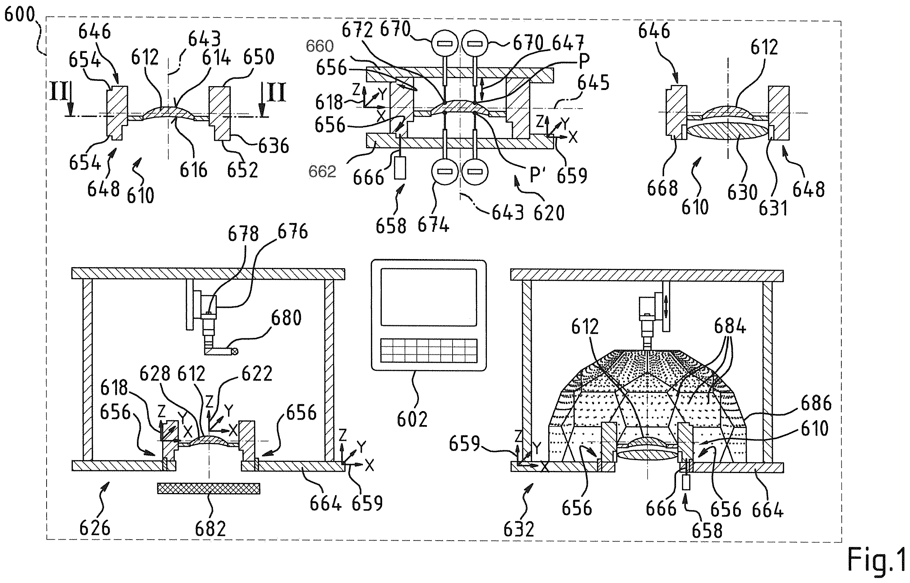

Das in der Fig. 1 gezeigte System 600 dient für das Ermitteln der räumlichen Struktur von einem Brillenglas 612, das in einer Halteeinrichtung 610 aufgenommen ist. Das Brillenglas 612 hat einen Glaskörper aus einem für das sichtbare Licht transparentem Material. Dieser Glaskörper weist eine erste, konvexe optisch wirksame Fläche 614 auf und hat eine zweite optisch wirksame Fläche 616, die konkav ist. Unter einer optisch wirksamen Fläche des Glaskörpers ist dabei vorliegend eine Fläche zu verstehen, die auf die Fläche auftreffendes Licht, bevorzugt sichtbares Licht, zumindest teilweise gerichtet reflektiert.

Zu bemerken ist, dass in dem System 600 natürlich auch Brillengläser mit einem Glaskörper vermessen werden können, bei dem die erste oder die zweite optisch wirksame Fläche beliebig gekrümmt ist oder gar keine Krümmung hat.

Zu bemerken ist allerdings, dass in dem System 600 grundsätzlich auch die räumliche Struktur eines von einem Brillenglas verschiedenen Gegenstands vermessen werden kann, der eine erste und eine zweite optisch wirksame Fläche hat, die das auf die Fläche auftreffende Licht zumindest teilweise gerichtet reflektiert.

Das System 600 umfasst neben der Halteeinrichtung 610 eine erste Messstation 620 für das Referenzieren der Lage von drei Punkten P auf der ersten optisch wirksamen Fläche 614 und der Lage von drei Punkten P' auf der zweiten optisch wirksamen Fläche 616 in einem zu der Halteeinrichtung 610 ortsfesten Koordinatensystem 618.

In dem System 600 gibt es außerdem eine zweite Messstation 626 für Referenzieren eines zu dem Brillenglas 612 gegenstandsfesten kartesischen Koordinatensystems 622 zu dem Koordinatensystem 618, das zu der Halteeinrichtung 610 ortsfest ist. Die Messstation 626 ermöglicht hierfür das Vermessen der Winkellage einer auf der ersten optisch wirksamen Fläche 614 oder der zweiten optisch wirksamen Fläche 616 angeordneten Markierung 628 des Brillenglases 612. Weiter enthält das System 600 für das Bestimmen der Topografie der ersten optisch wirksamen Fläche 614 und der zweiten optisch wirksamen Fläche 616 eine dritte Messstation 632.

In der Halteeinrichtung 610 kann neben einem Brillenglas 612 zusätzlich auch eine Feldlinse 630 aufgenommen werden, die in einer Linsenfassung 631 festgelegt ist, die an einen Grundkörper 636 der Halteeinrichtung 610 angeschlossen werden kann. Die Linsenfassung 631 ist derart ausgebildet, das die Feldlinse 630 bei Anschluss an den Grundkörper 636 der Halteeinrichtung 610 definiert angeordnet und in Bezug auf den Grundkörper 636 der Halteeinrichtung eindeutig positioniert ist.

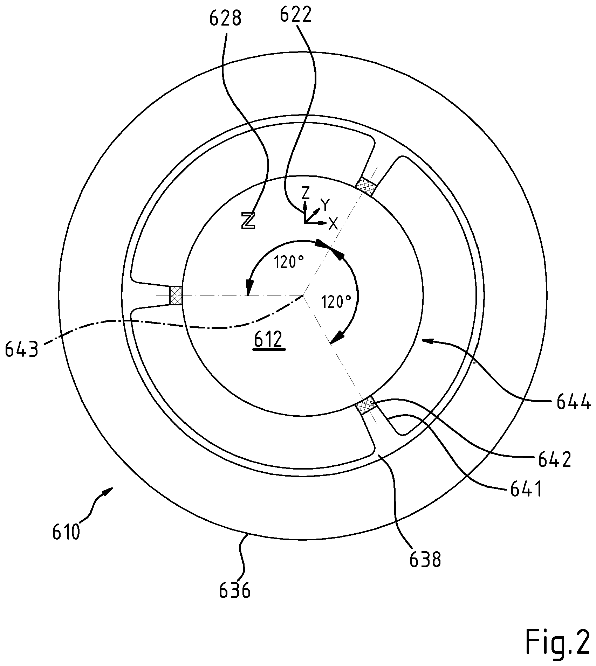

Die Fig. 2 zeigt die Halteeinrichtung 610 in dem System 600 als Schnitt entlang der Linie II - II aus Fig. 1. Der Grundkörper 636 der Halteeinrichtung 610 hat eine hohlzylindrische Form. Die Halteeinrichtung 610 umfasst ein an den Grundkörper 636 angeschlossenes Halteorgan 638 für das Umgreifen des seitlichen Rands 644 von einem Brillenglas 612, das in der Halteeinrichtung 610 aufgenommen ist.

Das Halteorgan 638 hat mehrere kraftsensitive Haltestege 641 mit einem Kontaktkörper 642, der aus einem elastischen Material besteht und der jeweils an dem seitlichen Rand 644 eines in der Halteeinrichtung 610 aufgenommenen Brillenglases 612 anliegt. Die Haltestege 641 sind zu der Achse 643 des Grundkörpers 636 symmetrisch angeordnet. Die zueinander benachbarten Haltestege 641 schließen jeweils den Winkel α = 120° ein. Es sei bemerkt, dass in der Halteeinrichtung 610 grundsätzlich auch vier, fünf oder auch noch mehr Haltestege mit daran aufgenommenen Kontaktkörpern vorgesehen sein können, um ein Brillenglas 612 festzulegen.

Die Halteeinrichtung 610 ermöglicht es, ein Brillenglas 612 so aufzunehmen, dass es durch die Haltekräfte nicht verformt wird. In der Halteeinrichtung 610 wird ein Brillenglas 612 aber so festgehalten, dass sich die Position des Brillenglases 612 in einem zu der Halteeinrichtung 610 ortsfesten Koordinatensystem 618 bei dem Vermessen in dem System 600 nicht verändert, auch wenn die Halteeinrichtung 610 dabei von einer Messstation in dem System zu einer anderen Messstation bewegt und dabei insbesondere gekippt und/oder gedreht wird.

Die Kontaktkörper 642 in der Halteeinrichtung 610 sind als steuerbare Kontaktkörper ausgebildet. Mit einer geeigneten Steuervorrichtung (nicht gezeigt) ist es hier möglich, die Härte, die Viskosität, die Elastizität und/oder die Anpresskraft der Kontaktkörper 642 in der Halteeinrichtung 610 einzustellen.

Die Markierung 628 auf der optisch wirksamen Fläche 614 des Brillenglases 612 dient als ein Ausrichtmerkmal für das Brillenglas 612. Diese Markierung kann insbesondere eine Permanentmarkierung sein. Die Markierung 628 definiert anhand ihrer Geometrie und/oder anhand ihrer Lage auf der optisch wirksamen Fläche 614 das zu dem Brillenglas 612 gegenstandsfeste Koordinatensystem 622. Zu bemerken ist, dass die Markierung 628 grundsätzlich nicht nur auf einer optisch wirksamen Brillenglasfläche vorgesehen sein kann, sondern alternativ hierzu auch innerhalb des Körpers von einem Brillenglas.

Wie die Fig. 1 zeigt, hat der Grundkörper 636 der Halteeinrichtung 610 für ein Brillenglas 612 an seinen stirnseitigen Enden 646, 648 ebene Stirnflächen 650, 652. An den stirnseitigen Enden 646, 648 des Grundkörpers 636 gibt es jeweils ein Verzahnungsorgan 654. Die Verzahnungsorgane 654 sind vorliegend als eine Ausnehmung in dem Grundkörper 636 ausgebildet.

In den Messstationen 620, 626 und 632 gibt es für die Verzahnungsorgane 654 der Halteeinrichtung 610 komplementäre Verzahnungsorgane 656. Die komplementären Verzahnungsorgane 656 in der Messstation 620 sind als Zahnrücken in einem Haltekörper 660, 662 gestaltet. Demgegenüber sind in den Messstationen 626 und 632 die komplementären Verzahnungsorgane 656 als Stifte ausgeführt, die sich an einem Basiskörper 664 der Messstationen 626 und 632 befinden.

Die Messstationen 620 und 632 enthalten außerdem jeweils eine Lageerfassungseinrichtung 658 für das Erfassen der Lage einer darin angeordneten Halteeinrichtung 610 mit einem Brillenglas 612. Die Lageerfassungseinrichtung 658 enthält einen taktilen Sensor mit einem verlagerbaren Messstift 666. An dem stirnseitigen Ende 648 des Grundkörpers 636 der Halteeinrichtung 610 gibt es eine Bohrung. Wenn sich die Halteeinrichtung 610 in den Messstationen 620, 626 und 632 in einer Messposition befindet, ist das Verzahnungsorgan der Halteeinrichtung 610 mit dem komplementären Verzahnungsorgan 656 an dem Basiskörper 664 der Messstationen 626 und 632 bzw. den Haltkörpern 660, 662 der Messstation 620 in Eingriff. Der Messstift 666 der Einrichtung 658 für das Erfassen der Lage einer darin angeordneten Halteeinrichtung 610 ragt dann entweder in die Bohrung des Grundkörpers 636 der Halteeinrichtung 610 oder er stößt an der Stirnfläche 652 des Grundkörpers 636 an.

Die Verzahnungsorgane 654 der Halteeinrichtung 610 und die hierzu komplementären Verzahnungsorgane 656 und die Lageerfassungseinrichtung 658 in den Messstationen 620, 626 und 632 sind Mittel für das umkehrbareindeutige Referenzieren eines zu der Halteeinrichtung 610 ortsfesten Koordinatensystems 618 zu einem Koordinatensystem 659, das zu einem Basiskörper 664 der Messstationen 626 und 632 bzw. dem Haltekörper 662 der Messstation 620 jeweils ortsfest ist. Die vorgenannten Mittel für das Referenzieren definieren die Relativposition des zu der Halteeinrichtung 610 ortsfesten Koordinatensystems 618 zu dem Koordinatensystem 659 der Messstationen. Sie ermöglichen damit, dass wenn man die Position von Punkten P, P' auf einem in einer Halteeinrichtung 610 aufgenommenen Brillenglas 612 in einem zu der Halteeinrichtung 610 ortsfesten Koordinatensystem 618 kennt, in jeder der Messstationen 620, 626 und 632 des Systems 600 zwangsläufig auch die Position dieser Punkte P, P' in einem zu dem Basiskörper 664 bzw. Haltkörper 662 ortsfesten Koordinatensystem 659 bekannt ist.

Um in der ersten Messstation 620 die Lage von einem Punkt P auf der ersten optisch wirksamen Fläche 614 des Brillenglases 612 und die Lage von einem Punkt P' auf der zweiten optisch wirksamen Fläche 616 des Brillenglases 612 in dem zu der Halteeinrichtung 610 ortsfesten Koordinatensystem 618 zu bestimmen, können die Punkte P, P' auf dem Brillenglas 612 darin durch Berühren mittels taktiler Messtaster 670, 674 abgetastet werden.

Die Messtaster 670, 674 sind zu den Haltekörpern 660, 662 der Messstation 620 referenziert. Sie haben jeweils einen Messkopf 672, der in der Messstation 620 entsprechend dem Doppelpfeil 647 in der Richtung der Achse 643 des Grundkörpers 636 der Halteeinrichtung 610 verlagerbar ist. Aufgrund der vorstehend erläuterten Mittel für das Referenzieren kann dabei mittels der Messtaster 670 die Position des Messkopfs 672 eines Messtasters 670 in dem zu den Haltekörpern 660, 662 der Halteeinrichtung 610 ortsfesten Koordinatensystem 659 erfasst werden. Die Messtaster 670 in der Messstation 620 sind hier so angeordnet, dass die von den Messköpfen 672 der Messtaster 670 auf den optisch wirksamen Flächen 614, 616 des Brillenglases 612 erfassten Punkte P, P' einander gegenüber liegen und dort jeweils eine Ebene festlegen.

Die Position der Messköpfe 672 der Messtaster 670 einerseits und der Messtaster 674 in einer zu der Achse 643 senkrechten Ebene andererseits ist in der Messstation 620 paarweise identisch, diese Ebene ist parallel zu der Ebene 645. Damit ermöglicht die Messstation 620 auch die Lage von Punkten P, P' auf den optisch wirksamen Flächen des Brillenglases 612 zu bestimmen, indem die Dicke des Brillenglases 612 an zwei einander gegenüberliegenden Punkten P, P' ermittelt und die gemessene Dicke mit der Lage des Messkopfes 672 eines Messtasters 670 auf einer der optisch wirksamen Flächen des Brillenglases 612 in dem zu dem Haltekörper 662 der Messstation 620 ortsfesten Koordinatensystem 659 kombiniert wird.

Die zweite Messstation 626 enthält eine Kamera 676 mit einem Bildsensor 678. Die Kamera 676 ist in Bezug auf den Basiskörper 664 der Messstation 662 verlagerbar angeordnet. Dabei ist die Position der Kamera 676 in den zu dem Basiskörper 664 der Messstation 626 ortsfesten Koordinatensystem 659 bekannt. D. h., die Kamera 676 ist in jeder Position zu dem Koordinatensystem 659 eindeutig referenziert. In der Messstation 626 gibt es eine Beleuchtungseinheit 680 und einen Reflektor 682. In der Messstation 626 kann damit ein in der Halteeinrichtung 610 angeordnetes Brillenglas 612 so beleuchtet werden, dass sich mit der Kamera 676 die Position der Markierung 628 auf dem Brillenglas 612 in dem zu dem Basiskörper 664 der Messstation 662 ortsfesten Koordinatensystem 659 erfassen lässt.

Die dritte Messstation 632 für das Bestimmen der Topografie der ersten und der zweiten optisch wirksamen Fläche 614, 616 in dem System 600 hat eine Vielzahl von Punktlichtquellen 684 in Form von Leuchtdioden (LEDs), die auf der Mantelfläche 686 eines Polyeders positioniert sind.

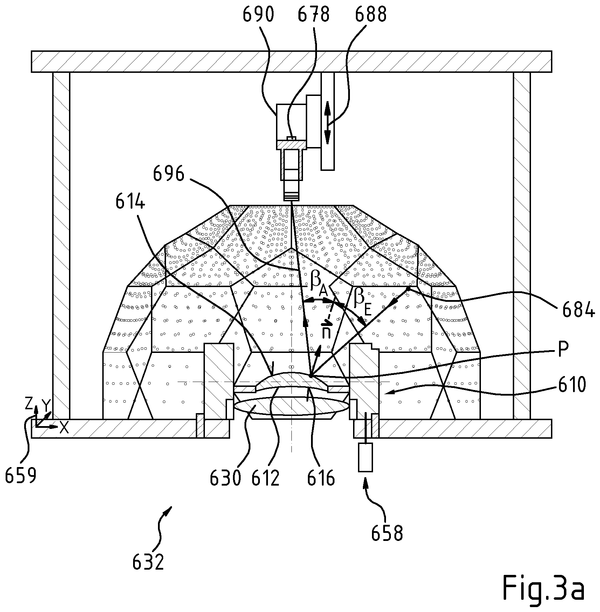

Die Fig. 3a zeigt die Messstation 632 in einer vergrößerten Darstellung. Die Halteeinrichtung 610 mit einem darin aufgenommenen Brillenglas 612 ist hier in einer ersten Messposition angeordnet. Die Messstation 632 enthält eine in der Richtung des Doppelpfeils 688 verlagerbare Kamera 690 mit einem Bildsensor 678 für das Erfassen einer Helligkeitsverteilung, die von dem an der zu vermessenden optisch wirksamen Fläche 614 reflektierten Licht der Punktlichtquellen 684 auf dem Bildsensor 678 hervorgerufen wird. Das Licht von einer Punktlichtquelle 684 gelangt mit dem Lichtstrahl 696 auf die optisch wirksame Fläche 614. An dem Punkt P mit den Koordinaten (X_{S},Y_{S},Z_{S}) wird das Licht mit dem Einfallswinkel β_{E} in Bezug auf die Oberflächennormale n̅_{P} gemäß dem Reflexionsgesetz unter dem Ausfallswinkel β_{A} = β_{E} reflektiert.

Die Helligkeitsverteilung auf dem Bildsensor 678 enthält damit die Information der Neigung der Tangentialebenen an der zu vermessenden optisch wirksamen Fläche 614 des Brillenglases 612 an denjenigen Stellen, an denen das Licht der Punktlichtquellen 684 so reflektiert wird, dass es die Kamera 690 einfängt.

Die Messstation 632 umfasst eine Rechnereinheit (nicht gezeigt), die als eine Einrichtung für das Aktivieren der unterschiedlichen Punktlichtquellen 684 und für das Erfassen und Auswerten der auf dem Bildsensor 678 in der Kamera 690 anfallenden Helligkeitsverteilung fungiert. Für das Auswerten einer mit dem Bildsensor 678 in der Kamera 690 erfassten Helligkeitsverteilung gibt es in dieser Rechnereinheit ein Computerprogramm. Das Computerprogramm berechnet für einen mit der Kamera 690 auf dem Bildsensor 678 erfassten Lichtstrahl 696 von einem Punkt P auf der optisch wirksamen Fläche 614 des in der Messstation 632 angeordneten Brillenglases 612 und den bekannten Positionen der Punktlichtquellen 684 in der Messstation 632 die Oberflächennormale n̅_{P} an diesem Punkt. Durch Integration und Interpolation wird dann aus einer Vielzahl von ermittelten Oberflächennormalen n̅_{P} in dem Computerprogramm die Topografie der optisch wirksamen Fläche 614 berechnet.

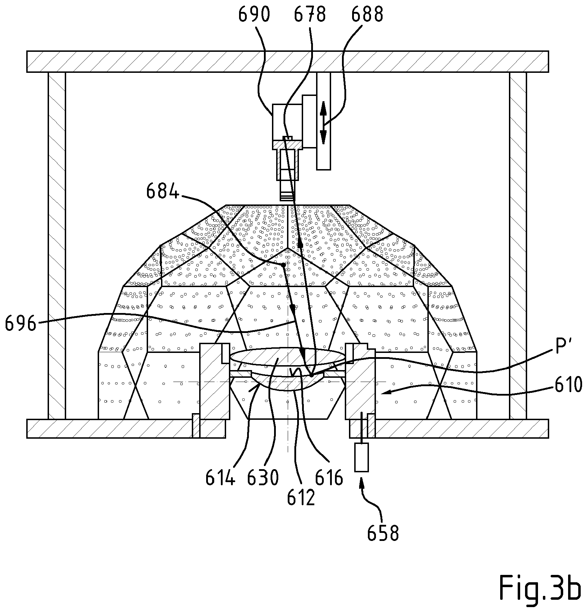

Die Feldlinse 630 in dem in der Fig. 1 gezeigten System 600 ist ein optisches Element, das eine positive Brechkraft hat. Die Feldlinse 630 ist also eine Sammellinse. Um die Topografie der konkaven optisch wirksamen Fläche 616 des Brillenglases 612 zu bestimmen, wird in der Messstation 632 die Halteeinrichtung 610 mit der Feldlinse 630 und einem darin aufgenommenen Brillenglas 612 in der in der Fig. 3b gezeigten Messposition angeordnet.

Die Feldlinse 630 bewirkt hier, dass das Licht der Punktlichtquellen 684 zu der optisch wirksamen Fläche 616 gelenkt und das an dieser Fläche reflektierte Licht wiederum der Kamera 690 zugeführt wird. Das Computerprogramm der Messstation 632 berechnet hier wiederum für einen mit der Kamera 690 auf dem Bildsensor 678 erfassten Lichtstrahl 696 von einem Punkt P' auf der optisch wirksamen Fläche 616 des in der Messstation 632 angeordneten Brillenglases 612 und den bekannten Positionen der Punktlichtquellen 684 in der Messstation 632 die Oberflächennormale n̅_{P'} an diesem Punkt. Durch Integration und Interpolation wird dann in der Rechnereinheit der Messstation 632 mittels des Computerprogramms die Topografie der optisch wirksamen Fläche 616 berechnet.

Um die räumliche Struktur von einem Brillenglas 612 anzugeben, umfasst das in der Fig. 1 gezeigte System 600 eine Rechnereinheit 602. Die Rechnereinheit 602 enthält ein Computerprogramm, das aus den in den Messstationen 620, 626 und 632 für ein Brillenglas 612 ermittelten Messdaten die räumliche Struktur von dem Brillenglas 612 berechnet. Es sei bemerkt, dass bei einer modifizierten Ausgestaltung des Systems 600 bzw. einem modifizierten Betrieb des Systems 600 vorgesehen sein kann, dass in der Messstation 632 nur eine der Flächen 614, 616 des Brillenglases vermessen wird und die topographischen Daten zu der anderen Fläche in die Rechnereinheit 602 eingegeben werden, weil diese Daten bei dem entsprechenden Brillenglas bekannt sind.

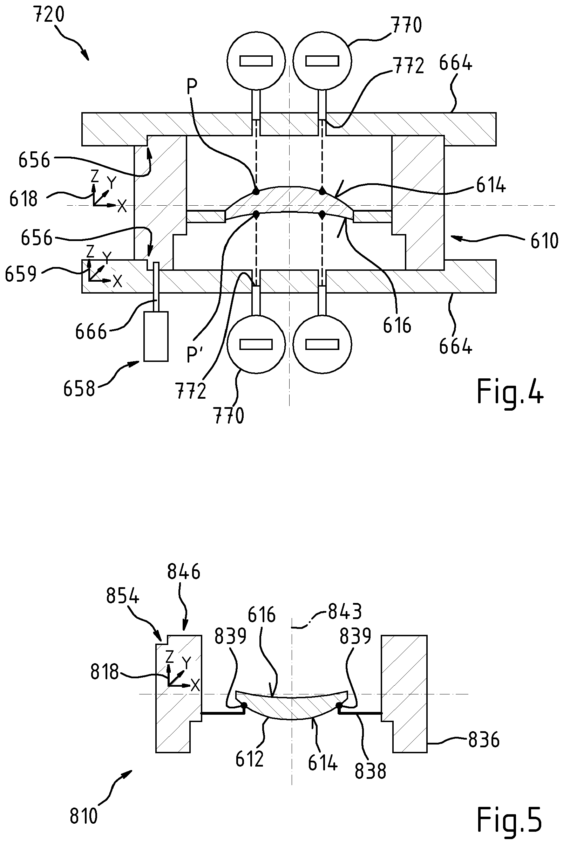

Die Fig. 4 zeigt eine der Messstation 620 funktional entsprechende weitere Messstation 720 für das Referenzieren der Lage von einem Punkt P auf der ersten optisch wirksamen Fläche 614 und einem Punkt P' auf der zweiten optisch wirksamen Fläche 616 in einem der Halteeinrichtung 610 ortsfesten Koordinatensystem. Soweit die in der Fig. 1 und der Fig. 4 gezeigten Baugruppen und Elemente zueinander als identisch sind, sind diese dort mit den gleichen Zahlen als Bezugszeichen kenntlich gemacht.

In der Messstation 720 gibt es für das Abtasten der optisch wirksamen Flächen 614, 616 eines Brillenglases 612 drei optische Abstandsmesssensoren 770. Mit den Abstandsmesssensoren 770 wird der Abstand einer Referenz 772 der Abstandsmesssensoren 770 zu einem Punkt P, P' auf einer der optisch wirksamen Flächen 614, 616 des Brillenglases 612 durch Vermessen der optischen Weglänge zwischen dem Punkt P, P' und der jeweiligen Referenz bestimmt. Die durch die Abstandmessung bestimmten Punkte P, P' auf der ersten und der zweiten optisch wirksamen Fläche 614, 616 des Brillenglases 612 legen auch hier jeweils eine Ebene fest.

In der Messstation 720 ist die Position der jeweiligen Referenz 772 eines Abstandsmesssensors 770 in einem zu dem Basiskörper 664 der Messstation 720 ortsfesten Koordinatensystem 659 bekannt. Die als Mittel für das Referenzieren wirkenden Verzahnungsorgane 654, 656 von Halteeinrichtung 610 und Messstation 720 ermöglichen hier wie in der vorstehend beschriebenen Messstation 620, dass mit dem Bestimmen der Lage der Punkte P, P' in dem zu dem Basiskörper 664 der Messstation 720 ortsfesten Koordinatensystem 659 auch die Lage der Punkte P, P' in dem zu der Halteeinrichtung 610 ortsfesten Koordinatensystem 618 bekannt ist.

Die Fig. 5 zeigt eine weitere Halteeinrichtung 810 für den Einsatz in einem System für das Ermitteln der räumlichen Struktur eines Brillenglases 612. Auch die Halteeinrichtung 810 hat einen hohlzylindrischen Grundkörper 836 und ein an den Grundkörper 836 angeschlossenes Halteorgan 838, das als eine Dreipunktauflage mit Kugelkörpern 839 (Kugelauflage) ausgebildet ist.

Soweit der Aufbau und die Funktion der Elemente der Halteeinrichtung 810 und der anhand der Fig. 1 und Fig. 2 beschriebenen Halteeinrichtung 610 einander entsprechen, sind diese in der Fig. 5 mit in Bezug auf die Fig. 1 um die Zahl 200 erhöhten Zahlen als Bezugszeichen kenntlich gemacht. Auch die Halteeinrichtung 810 ist für das Aufnehmen von einem optischen Element in Form einer Feldlinse ausgelegt, das eine positive Brechkraft hat und zusammen mit einem in der Halteeinrichtung 810 aufgenommenen Brillenglas 612 in einer entsprechenden Messstation angeordnet werden kann.

In der Halteeinrichtung 810 ist ein Brillenglas 612 auf einem als Dreipunktauflage ausgebildeten Halteorgan 838 positioniert, das drei Kugelkörper 839 aufweist, deren Position in einem zu der Halteeinrichtung 810 ortsfesten Koordinatensystem 818 eindeutig referenziert sind. In der Halteeinrichtung 810 ist damit die Lage der Punkte P, P' auf einer optisch wirksamen Fläche bekannt, an denen die optisch wirksame Fläche die Kugelkörper 839 berührt.

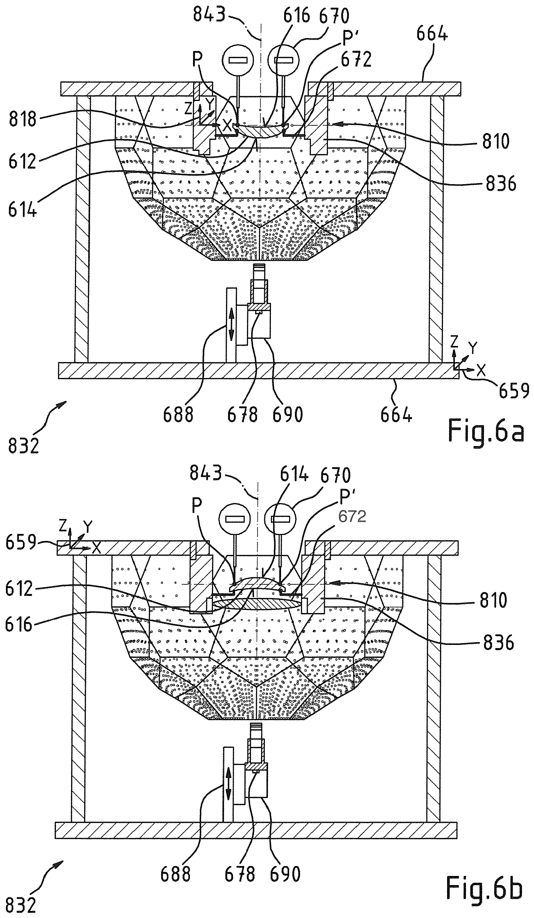

Die Fig. 6a zeigt eine weitere Messstation 832 zum Einsatz in einem System für das Ermitteln der räumlichen Struktur von einem Brillenglas 612. Soweit die Baugruppen der Messstation 832 den Baugruppen der anhand der Fig. 3a und Fig. 3b vorstehend beschriebenen Messstation 632 entsprechen, sind diese in der Fig. 6a mit den gleichen Bezugszeichen wie in der Fig. 3a und der Fig. 3b kenntlich gemacht. Die Messstation 832 enthält eine Halteeinrichtung 810, die einen vorstehend anhand der Fig. 5 beschriebenen Aufbau hat. Das Brillenglas 612 ist in der Fig. 6a in einer Messposition gezeigt, die das Bestimmen der Topografie der optisch wirksamen Fläche 614 des Brillenglases 612 gestattet. Die Messstation 832 ermöglicht das Referenzieren von drei den Kugelkörper 839 gegenüberliegenden Punkten P, P' auf einer optisch wirksamen Fläche 614, 616 des Brillenglases 612.

Die Fig. 6b zeigt die Messstation 832 mit einer Messposition für das Brillenglas 612, die das Bestimmen der Topografie der optisch wirksamen Fläche 616 gestattet.

In der Messstation 832 gibt es Messtaster 670 mit Messköpfen 672, die der Richtung der Achse 843 des Grundkörpers 836 der Halteeirichtung 810 verlagerbar sind. Mittels der Messtaster 670 kann die Lage von Punkten P auf einer optisch wirksamen Fläche eines Brillenglases 612 in einem zu der Messstation 832 ortsfesten Koordinatensystem 659 und damit auch in einem zu der Halteeinrichtung 810 ortsfesten Koordinatensystem 818 erfasst werden, die den Punkten gegenüberliegen, an denen das Brillenglas 612 auf den Kugelkörpern 839 der Dreipunktauflage des Halteorgans 838 ruht.

Die Messstation 832 eignet sich insbesondere für das Vermessen von Brillengläsern 612, die zu der Achse 843 des Grundkörpers 836 der Halteeinrichtung 810 rotationssymmetrisch sind. Zu bemerken ist allerdings, dass in der Messstation 832 natürlich auch nicht rotationssymmetrische Brillengläser vermessen werden können.

Darüber hinaus sei bemerkt, dass in der Messstation 832 anstelle der Messtaster 670 mit den verlagerbaren, taktilen Messköpfen 672 grundsätzlich auch optische Abstandsmesssensoren eingesetzt werden können, wie dies anhand der Fig. 4 vorstehend beschrieben ist.

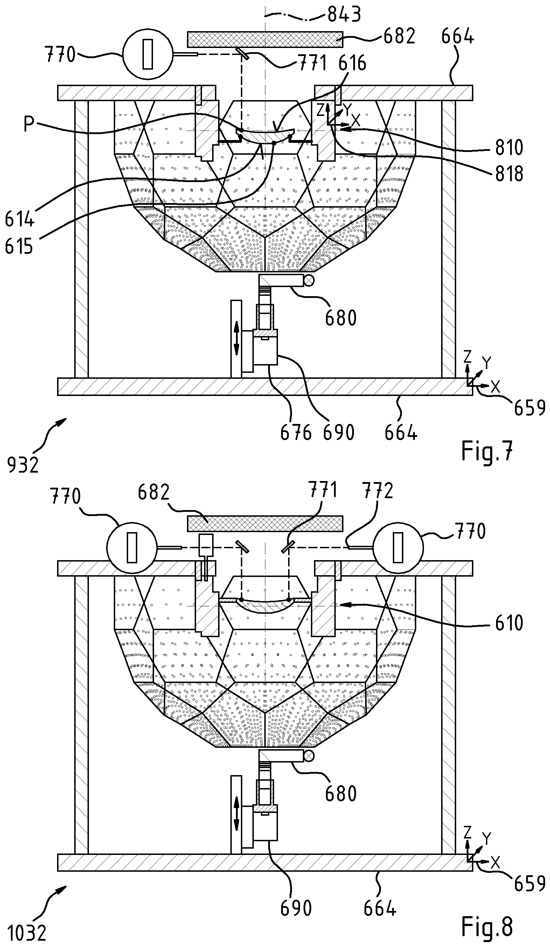

Die Fig. 7 zeigt eine Messstation 932 mit einer Halteeinrichtung 810 für das Bestimmen der Topografie der optisch wirksamen Flächen 614 eines Brillenglases 612 und das gleichzeitige Referenzieren von drei den Kugelkörpern 839 gegenüberliegenden Punkten P, P' auf den optisch wirksamen Flächen 614, 616 des Brillenglases 612 in einem zu dem Basiskörper 664 ortsfesten Koordinatensystemen 659. Soweit die Baugruppen der Messstation 932 den Baugruppen der anhand der Fig. 6a und Fig. 6b vorstehend beschriebenen Messstation 832 entsprechen, sind diese in der Fig. 7 mit den gleichen Bezugszeichenwie in der Fig. 6 a und Fig. 6b kenntlich gemacht.

In die Messstation 932 ist ein optischer Abstandsmesssensor 770 integriert, der einen Spiegel 771 umfasst, der in einer zu der Achse 843 der Halteeinrichtung 810 senkrechten Ebene in zwei unterschiedlichen Raumrichtungen verlagert werden kann. Wie vorstehend anhand der Fig. 4 beschrieben, kann damit die Lage von Punkten P auf der optisch wirksamen Fläche 616 des Brillenglases 612 in einem zu dem Basiskörper 664 der Messstation 932 ortsfesten Koordinatensystem 659 bestimmt werden.

Die Messstation 932 enthält außerdem eine Beleuchtungseinheit 680 und einen Reflektor 682. Damit kann die in der Messstation 932 angeordnete Kamera 676 auch für das Bestimmen der Winkellage von auf einer optisch wirksamen Fläche 614, 616 angeordneten Markierung 615 eingesetzt werden, d. h. für das Referenzieren eines zu dem Brillenglas 612 gegenstandsfesten Koordinatensystem zu dem Koordinatensystem 659, das zu dem Basiskörper 664 ortsfest ist.

Auf diese Weise ermöglicht die Messstation 932, dass darin an einem Brillenglas 612 alle erforderlichen Messungen durchgeführt werden können, um die räumliche Struktur für das Brillenglas zu ermitteln. Das Brillenglas 612 muss in der Messstation 932 hierfür lediglich in zwei unterschiedlichen Messpositionen vermessen werden. Um das Brillenglas 612 in der Messstation 932 aus der einen Messposition in die andere Messposition zu verlagern, ist es lediglich erforderlich, das Brillenglas 612 zu wenden.

Die Fig. 8 zeigt eine weitere Messstation 1032 mit einer Halteeinrichtung 610 für das Bestimmen der Topografie der optisch wirksamen Flächen 614, 616 eines Brillenglases 612 und das Referenzieren von jeweils drei auf den optisch wirksamen Flächen 614, 616 des Brillenglases 612 angeordneten Punkten P, P'. Soweit die Baugruppen der Messstation 1032 den Baugruppen der anhand der Fig. 3a und Fig. 3b vorstehend beschriebenen Messstation 632 entsprechen, sind diese in der Fig. 8 mit den gleichen Bezugszeichen wie in der Fig. 3 a und Fig. 3b kenntlich gemacht.

In die Messstation 1032 sind optische Abstandsmesssensoren 770 mit einem Spiegel 771 integriert, um damit wie anhand der Fig. 7 vorstehend beschrieben, auf der optisch wirksamen Fläche 616 des Brillenglases 612 drei Ortspunkte P' bestimmen zu können, die eine Ebene definieren und die zu dem Koordinatensystem 659 des Basiskörpers 664 referenziert sind.

Die Messstation 1032 enthält außerdem eine Beleuchtungseinheit 680 und einen Reflektor 682. Damit kann die in der Messstation 1032 angeordnete Kamera 690 auch für das Bestimmen der Winkellage von auf einer optisch wirksamen Fläche 614, 616 angeordneten Markierung 615 eingesetzt werden und damit für das Referenzieren eines zu dem Brillenglas 612 gegenstandsfesten Koordinatensystem zu dem Koordinatensystem 659 das zu dem Basiskörper 664 ortsfest ist.

Auch in der Messstation 1032 können damit an einem Brillenglas 612 alle erforderlichen Messungen durchgeführt werden, um dessen räumliche Struktur zu ermitteln. Die Halteeinrichtung 610 muss in der Messstation 1032 hierfür lediglich einmal gewendet werden.

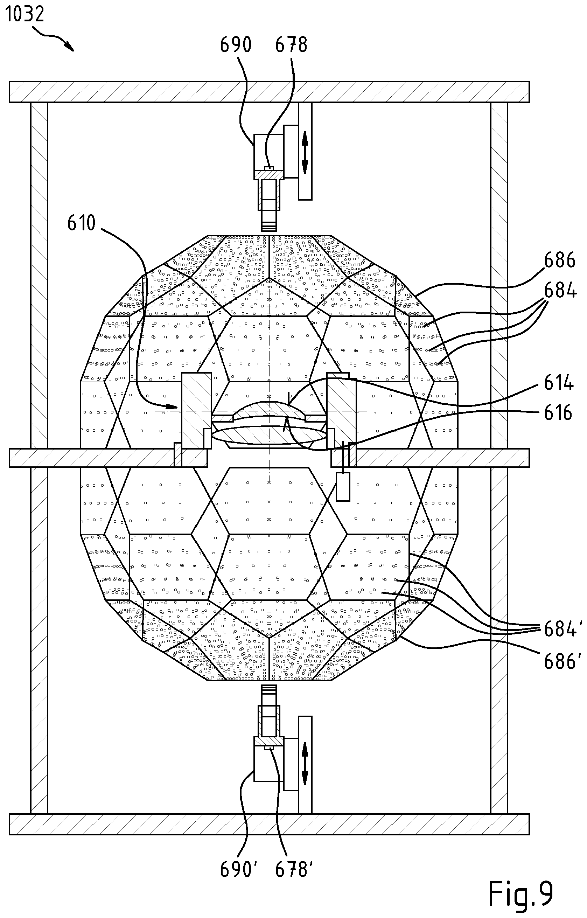

Die Fig. 9 zeigt eine weitere Messstation 1132 mit einer Halteeinrichtung 610 für das Bestimmen der Topographie der optisch wirksamen Flächen 614, 616 eines Brillenglases 612. Soweit die Baugruppen der Messstation 1132 den Baugruppen der anhand der Fig. 3a und Fig. 3b vorstehend beschriebenen Messstation 632 entsprechen, sind diese in der Fig. 9 mit den gleichen Bezugszeichen wie in der Fig. 3a und Fig. 3b kenntlich gemacht.

In der Messstation 1132 ist es möglich, die optisch wirksamen Flächen 614, 616 des Brillenglases 612 zu vermessen, indem auf den Bildsensor 678 der Kamera 690 und dem Bildsensor 678' der Kamera 690' eine Helligkeitsverteilung erfasst wird, die von dem an den zu vermessenden optisch wirksamen Flächen 614, 616 reflektierten Licht der Punktlichtquellen 684, 684' erfasst wird, die auf der Mantelfläche 686 eines ersten Polyeders und der Mantelfläche 686' eines zweiten Polyeders positioniert sind.

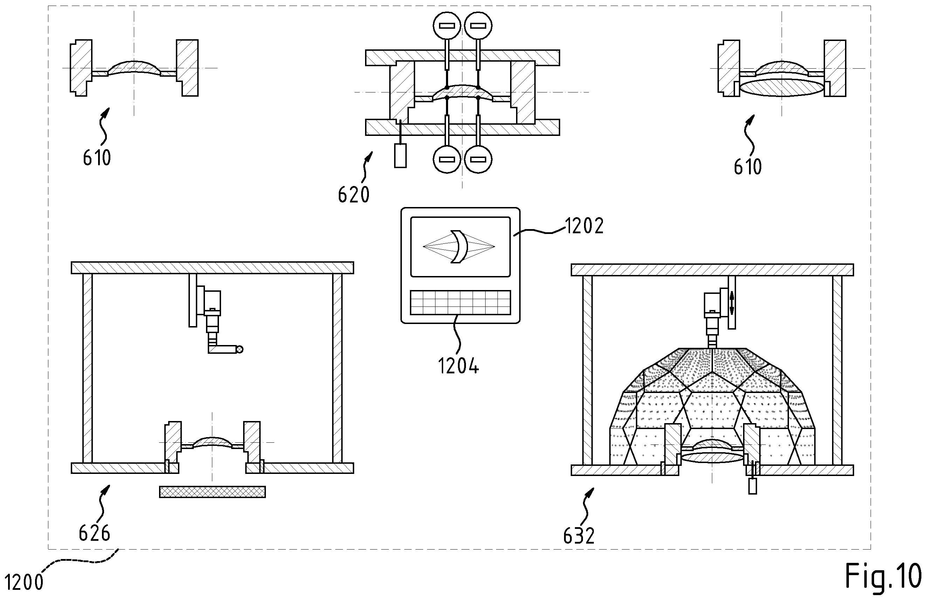

Die Fig. 10 zeigt ein System 1200 für das Ermitteln der orts- und richtungsabhängigen optischen Wirkung eines Brillenglases 612. Soweit die Baugruppen in dem System 1200 den Baugruppen des anhand der vorstehenden Figuren beschriebenen Systems 600 entsprechen, sind diese in der Fig. 10 mit den gleichen Bezugszeichen kenntlich gemacht wie in der Fig. 1.

Das System 1200 enthält eine Rechnereinheit 1202 mit einer Eingabeeinheit 1204, die das Eingeben der Brechzahl für das Material von einem in dem System 1200 vermessenen Brillenglas 612 ermöglicht, und die von den Messstationen 620, 626 und 632 die zu dem Brillenglas 612 dort ermittelten Daten mit der Information über die räumliche Brillenglasstruktur erhält.

Die Rechnereinheit 1202 enthält ein Computerprogramm, das mittels einer Raytracingmethode aus den in den Messstationen 620, 626 und 632 ermittelten Daten und der Brechzahl für das Brillenglasmaterial die optische Wirkung des Brillenglases sowohl orts- als auch richtungsabhängig berechnet, d. h. z. B. die lokalen Krümmungen des Brillenglases und dessen lokalen Astigmatismus.

Von Vorteil ist es dabei, wenn das Computerprogramm und die Rechnereinheit 1202 so ausgelegt sind, dass damit die Brechkraft des Brillenglases mit einer Genauigkeit von besser als 1/100 dpt berechnet werden kann.

Darüber hinaus ist es von Vorteil, in einem der vorstehend beschriebenen Systeme 600 oder 1200 eine vorzugsweise als Industrieroboter ausgebildete Handhabungseinrichtung für das Bewegen der Brillengläser zwischen den unterschiedlichen Messstationen zu integrieren und dort entsprechende möglichst robotergesteuerte Zufuhr- und Entnahmesysteme für die Brillengläser in die Messstationen vorzusehen, die insbesondere Kinematiken mit Saugern und/oder Greifern enthalten können.

Insbesondere ist es von Vorteil, wenn die Systeme mit einer RFID (Radio-Frequency-Identification)-Einrichtung oder einer Einrichtung für das Erfassen von 2D- oder 3D-Codes kombiniert werden, um z. B. auf einer Brillenglasträgereinrichtung abgespeicherte individuelle Brillenglasdaten in den Systemen zu berücksichtigen.

Das vorstehend beschriebene System 1200 eignet sich insbesondere für die Überwachung der Qualität von Brillengläsern, Brillenglashalbfabrikaten oder Brillenglasrohlingen in einer Brillenglasfertigungseinrichtung. Mit einem solchen System ist es beispielsweise grundsätzlich möglich, die Abweichung einer Einhüllenden für die Brillenglasstruktur von einer Idealform zur Anzeige zu bringen oder diese Abweichungen an eine Bearbeitungsstation für ein Brillenglas zu übermitteln. Insbesondere ist es möglich, mit einem solchen System Brillengläser, die bestimmte vorgeschriebene Spezifikationen nicht erfüllen, automatisch auszusondern. Darüber hinaus ist es möglich, die in dem vorstehend beschriebenen System 1200 ermittelte orts- und richtungsabhängige optische Wirkung auf ein Brillenglas aufzudrucken oder für ein Brillenglas, das in dem System 1200 vermessen wird, eine entsprechende Beschriftung (Label) oder ein Datenblatt mit diesen Messinformationen anzufertigen.

Zusammenfassend sind insbesondere folgende bevorzugte Merkmale der Erfindung festzuhalten: Um die räumliche Struktur eines Gegenstands zu ermitteln, insbesondere eines Brillenglases 612, eines Brillenglasrohlings oder eines Brillenglashalbfabrikats, der eine erste optisch wirksame Fläche 614 und eine zweite optisch wirksame Fläche 616 hat, werden folgende Schritte durchgeführt: Der Gegenstand 612 wird in einer Halteeinrichtung 610, 810 angeordnet. Die Lage von wenigstens einem Punkt (P) auf der ersten optisch wirksamen Fläche 614 und die Lage von wenigstens einem Punkt (P') auf der zweiten optisch wirksamen Fläche 616 wird in einem zu der Halteeinrichtung 610, 810 ortsfesten Koordinatensystem referenziert. Es wird die Topografie der ersten optisch wirksamen Fläche 614 des Gegenstands 612 wird in einem anhand der Lage des wenigstens einen Punkts (P) auf der ersten optisch wirksamen Fläche 614 zu der Halteeinrichtung 610, 810 referenzierten Koordinatensystem 659 bestimmt und es wird die räumliche Struktur des Gegenstands 612 aus der Topografie der ersten optisch wirksamen Fläche 614 und aus einem zu dem ortsfesten Koordinatensystem 618, 818 der Halteeinrichtung 610, 810 anhand der Lage des wenigstens einen Punkts (P') auf der zweiten optisch wirksamen Fläche 616 referenzierten Datensatz über die Topografie der zweiten optisch wirksamen Fläche 616 berechnet.

### Bezugszeichenliste:

- 600: System
- 602: Rechnereinheit
- 610: Halteeinrichtung
- 612: Brillenglas
- 614: erste optisch wirksame Fläche
- 615: Markierung
- 616: zweite optisch wirksame Fläche
- 618: Koordinatensystem
- 620: Messstation
- 622: Koordinatensystem
- 626: zweite Messstation
- 628: Markierung
- 630: Feldlinse
- 631: Linsenfassung
- 632: dritte Messstation
- 636: hohlzylindrischer Grundkörper
- 638: Halteorgan
- 640: seitlicher Rand
- 641: kraftsensitive Haltestege
- 642: Kontaktkörper
- 643: Achse
- 644: seitlichen Rand
- 645: senkrechte Ebene
- 646: stirnseitiges Ende
- 647: Doppelpfeil
- 648: stirnseitiges Ende
- 652: Stirnfläche
- 654: Verzahnungsorgan
- 656: komplementäre Verzahnungsorgane
- 658: Lageerfassungseinrichtung
- 659: Koordinatensystem
- 660: Haltekörper
- 662: Haltekörper
- 664: Basiskörper
- 666: verlagerbarer Messstift
- 668: Bohrung
- 670: Messtaster
- 672: Messkopf
- 674: Messtaster
- 676: Kamera
- 678: Bildsensor
- 678': Bildsensor
- 680: Beleuchtungseinheit
- 682: Reflektor
- 684: Punktlichtquelle
- 684': Punktlichtquelle
- 686: Mantelfläche
- 686': Mantelfläche
- 688: Doppelpfeil
- 690: Kamera
- 690': Kamera
- 696: Lichtstrahl

- 720: Messstation
- 770: optischer Abstandssensor / Abstandsmesser
- 771: Spiegel
- 772: Referenz

- 810: Halteeinrichtung
- 818: Koordinatensystem
- 832: Messstation
- 836: Grundkörper
- 838: Halteorgan
- 839: Kugelkörper
- 843: Achse

- 932: Messstation

- 1032: Messstation

- 1132: Messstation

- 1200: System
- 1202: Rechnereinheit
- 1204: Eingabeeinheit

## Patentansprüche

1. Verfahren für das Ermitteln der räumlichen Struktur eines Gegenstands, insbesondere einer Linse, z. B. eines Brillenglases (612), eines Brillenglasrohlings oder eines Brillenglashalbfabrikats, der eine erste optisch wirksame Fläche (614) und eine zweite optisch wirksame Fläche (616) hat,
mit den folgenden Schritten:
Anordnen des Gegenstands (612) in einer Halteeinrichtung (610, 810);
Referenzieren der Lage von wenigstens einem Punkt (P) auf der ersten optisch wirksamen Fläche (614) und der Lage von wenigstens einem Punkt (P') auf der zweiten optisch wirksamen Fläche (616) in einem zu der Halteeinrichtung (610, 810) ortsfesten Koordinatensystem (618, 818);
Bestimmen der Topografie der ersten optisch wirksamen Fläche (614) des Gegenstands (612) in einem Koordinatensystem (659), das zu dem zu der Halteeinrichtung (610, 810) ortsfesten Koordinatensystem (618, 818) referenziert ist; und
Berechnen der räumlichen Struktur des Gegenstands (612) aus der Topografie der ersten optisch wirksamen Fläche (614) und aus einem zu dem ortsfesten Koordinatensystem (618, 818) der Halteeinrichtung (610, 810) referenzierten Datensatz über die Topografie der zweiten optisch wirksamen Fläche (616),
**dadurch gekennzeichnet, dass**
die Topografie der ersten optisch wirksamen Fläche (614) des Gegenstands (612) in dem zu der Halteeinrichtung (610, 810) referenzierten Koordinatensystem (659) bestimmt wird, indem Licht aus einer Vielzahl von Punktlichtquellen (684, 684') bereitgestellt wird, das an der ersten optisch wirksamen Fläche (614) reflektiert wird, indem eine erste Helligkeitsverteilung erfasst wird, die von dem an der ersten optisch wirksamen Fläche (614) reflektierten Licht der Punktlichtquellen (684, 684') auf einem Bildsensor (678, 678') hervorgerufen wird, und indem die Topografie der ersten optisch wirksamen Fläche (614) aus der Lage von dem wenigstens einen Punkt (P) auf der ersten optisch wirksamen Fläche (614) des Gegenstands (612) und aus der erfassten ersten Helligkeitsverteilung in dem zu der Halteeinrichtung (610, 810) referenzierten Koordinatensystem (659) berechnet wird.

2. Verfahren für das Ermitteln der orts- und richtungsabhängigen optischen Wirkung eines Gegenstands, insbesondere einer Linse, z. B. eines Brillenglases (612), eines Brillenglasrohlings oder eines Brillenglashalbfabrikats, der eine erste optisch wirksame Fläche (614) und eine zweite optisch wirksame Fläche (616) hat,
**gekennzeichnet durch** folgende Schritte:
Ermitteln der räumlichen Struktur des Gegenstands (612) mit dem in Anspruch 1 angegebenen Verfahren; und
Berechnen der orts- und richtungsabhängigen optischen Wirkung des Gegenstands (612) aus der ermittelten räumlichen Struktur des Gegenstands (612) mit einem Raytracing-Verfahren.

3. Verfahren nach Anspruch 1 oder 2, **dadurch gekennzeichnet, dass** der zu dem ortsfesten Koordinatensystem (618, 818) referenzierte Datensatz über die Topografie der zweiten optisch wirksamen Fläche (616) bestimmt wird, indem Licht aus einer Vielzahl von Punktlichtquellen (684, 684') bereitgestellt wird, das an der zweiten optisch wirksamen Fläche (616) reflektiert wird, indem eine zweite Helligkeitsverteilung erfasst wird, die von dem an der zweiten optisch wirksamen Fläche (616) reflektierten Licht der Punktlichtquellen (684, 684') auf einem Bildsensor (678, 678') hervorgerufen wird, und indem die Topografie der zweiten optisch wirksamen Fläche (616) aus der Lage des wenigstens einen Punkts (P') auf der zweiten optisch wirksamen Fläche (616) des Gegenstands (612) und aus der erfassten zweiten Helligkeitsverteilung in dem zu der Halteeinrichtung (610, 810) ortsfesten Koordinatensystem (618, 818) berechnet wird.

4. Verfahren nach einem der Ansprüche 1 bis 3, **dadurch gekennzeichnet, dass** für das Angeben der räumlichen Struktur des Gegenstands (612) in einem gegenstandsfesten Koordinatensystem (622) das zu der Halteeinrichtung (610, 810) ortsfeste Koordinatensystem (618, 818) zu einem gegenstandsfesten Koordinatensystem (622) referenziert wird.

5. Verfahren nach Anspruch 4, **dadurch gekennzeichnet, dass** das zu der Halteeinrichtung (610, 810) ortsfeste Koordinatensystem (618, 818) durch Bestimmen der Lage einer auf dem Gegenstand (612) angebrachten Markierung (628) zu dem gegenstandsfesten Koordinatensystem (622) referenziert wird.

6. Verfahren nach einem der Ansprüche 1 bis 5, **dadurch gekennzeichnet, dass** die Lage des wenigstens einen Punkts (P, P') auf der ersten optisch wirksamen Fläche (614) oder auf der zweiten optisch wirksamen Fläche (616) in einem zu der Halteeinrichtung (610, 810) ortsfesten Koordinatensystem (618, 818) durch eine Dickenmessung des Gegenstands (612) bestimmt wird; und/oder
dass für das Referenzieren der Lage des wenigstens einen Punkts (P, P') auf der ersten optisch wirksamen Fläche (614) oder der zweiten optisch wirksamen Fläche (616) in einem zu der Halteeinrichtung (610, 810) ortsfesten Koordinatensystem (618, 818) der Gegenstand (612) mit einer Abstandsmesseinrichtung (670, 770) gegenüber der Halteeinrichtung vermessen wird; und/oder
dass für das Referenzieren der Lage des wenigstens einen Punkts (P, P') auf der ersten optisch wirksamen Fläche (614) oder der zweiten optisch wirksamen Fläche (616) in einem zu der Halteeinrichtung (810) ortsfesten Koordinatensystem (818) der Gegenstand (612) an dem wenigstens einem Punkt (P) an einer Kugelauflage (839) in der Halteeinrichtung (810) aufgenommen wird.

7. System (600) für das Ermitteln der räumlichen Struktur eines Gegenstands, insbesondere einer Linse, z. B. eines Brillenglases (612), eines Brillenglasrohlings oder eines Brillenglashalbfabrikats, der eine erste optisch wirksame Fläche (614) und eine zweite optisch wirksame Fläche (614) hat,
mit einer Halteeinrichtung (610, 810) für den Gegenstand (612);
mit einer Messstation (620, 820, 832, 932) für das Referenzieren der Lage von wenigstens einem Punkt (P) auf der ersten optisch wirksamen Fläche (614) und der Lage von wenigstens einem Punkt (P') auf der zweiten optisch wirksamen Fläche (616) in einem zu der Halteeinrichtung (610, 810) ortsfesten Koordinatensystem;
wobei die Messstation (832, 932) zusätzlich für das Bestimmen der Topografie der ersten optisch wirksamen Fläche (614) des Gegenstands (612) in einem Koordinatensystem (659) ausgelegt ist, das zu dem zu der Halteeinrichtung (610, 810) ortsfesten Koordinatensystem (618, 818) referenziert ist;
oder
mit einer weiteren Messstation (632, 832, 932, 1032) für das Bestimmen der Topografie der ersten optisch wirksamen Fläche (614) des Gegenstands (612) in einem Koordinatensystem (659), das zu dem zu der Halteeinrichtung (610, 810) ortsfesten Koordinatensystem (618, 818) referenziert ist;
und
mit einer Rechnereinheit für das Berechnen der räumlichen Struktur des Gegenstands (612) aus der Topografie der ersten optisch wirksamen Fläche (614) und aus einem zu dem ortsfesten Koordinatensystem (618, 818) der Halteeinrichtung (610, 810) referenzierten Datensatz über die Topografie der zweiten optisch wirksamen Fläche (616),
**dadurch gekennzeichnet, dass**
die Messstation (832, 932) oder die weitere Messstation (632, 832, 932, 1032) eine Vielzahl von Punktlichtquellen (684, 684') aufweist, die Licht bereitstellen, das an der zu vermessenden ersten optisch wirksamen Fläche (614, 616) eines in dem Aufnahmebereich angeordneten Gegenstands (612) reflektiert wird;
wobei die Messstation (832, 932) oder die weitere Messstation (632, 832, 932, 1032) wenigstens eine Kamera (690, 690') für das Erfassen einer Helligkeitsverteilung enthält, die von dem an der zu vermessenden ersten optisch wirksamen Fläche (614, 616) reflektierten Licht der Punktlichtquellen (684, 684') auf einem Bildsensor (678, 678') hervorgerufen wird;
und wobei die Rechnereinheit (602) ausgelegt ist die Topografie der ersten optisch wirksamen Fläche (614) aus der Lage von dem wenigstens einen Punkt (P) auf der ersten optisch wirksamen Fläche (614) des Gegenstands (612) und aus der erfassten Helligkeitsverteilung in dem zu der Halteeinrichtung (610, 810) referenzierten Koordinatensystem (659) zu berechnen.

8. System nach Anspruch 7, **dadurch gekennzeichnet, dass** die Messstation (1032) oder die weitere Messstation (1032) auch für das Vermessen der Topografie der zweiten optisch wirksamen Fläche (616) des Gegenstands (612) ausgelegt ist, um einen Datensatz über die Topografie der zweiten optisch wirksamen Fläche (616) des Gegenstands (612) bereitzustellen.

9. System nach einem der Ansprüche 7 oder 8, **dadurch gekennzeichnet, dass** die Halteeinrichtung (610, 810) zum Anordnen des Gegenstands (612) in einem Aufnahmebereich der Messstation (832, 932) oder der weiteren Messstation (632, 832, 932, 1032) ausgelegt ist, wobei in der Halteeinrichtung (610, 810) die Lage von wenigstens einem Punkt (P) auf der ersten optisch wirksamen Fläche (614) und von wenigstens einem Punkt (P') auf der zweiten optisch wirksamen Fläche (616) des Gegenstands (612) in einem zu der Halteeinrichtung (610, 810) ortsfesten Koordinatensystem ermittelt werden kann.

10. System nach Anspruch 9, **dadurch gekennzeichnet, dass** die Halteeinrichtung (810) mit einem darin aufgenommenen Gegenstand (612) in der Messstation (832, 932) oder der weiteren Messstation (632, 832, 932, 1032) in einer ersten Position anordenbar ist, in der die erste optisch wirksame Fläche (614) des Gegenstands (612) zu der Kamera (690) weist, und in einer von der ersten Position verschiedenen zweiten Position, in der die erste optisch wirksame Fläche (614) des Gegenstands (612) von der Kamera (690) abgewandt ist.

11. System nach einem der Ansprüche 7 bis 10, **gekennzeichnet durch** Mittel (654, 656, 658) für das Referenzieren eines zu der Halteeinrichtung (610) ortsfesten Koordinatensystems (618) zu einem Koordinatensystem (659), das zu der Messstation (632, 832, 932, 1032) ortsfest ist.

12. System nach einem der Ansprüche 1 bis 11, **dadurch gekennzeichnet, dass** die Messstation (832, 932) oder die weitere Messstation (932, 1032) eine Kamera (690) für das Erfassen der Lage einer auf dem Gegenstand (612) angeordneten Markierung (628) in einem zu der Messstation (632, 832, 932, 1032) oder der weiteren Messstation (932, 1032) ortsfesten Koordinatensystem (659) enthält; und/oder
dass die Rechnereinheit (1202) ein Computerprogramm enthält, das aus der Topografie der ersten optisch wirksamen Fläche (614) und aus dem Datensatz über die Topografie der zweiten optisch wirksamen Fläche (616) unter Berücksichtigung einer Brechzahl des Gegenstands eine orts- und/oder richtungsabhängige optische Wirkung des Gegenstands berechnet; und/oder
dass eine Verlagerungseinheit für das Zuführen von einem zu vermessenden Gegenstand in die Messstation oder die weitere Messstation und für das Abtransportieren von einem in der Messstation oder der weiteren Messstation zu vermessenden Gegenstand vorgesehen ist.

13. System (1200) nach einem der Ansprüche 7 bis 12, **dadurch gekennzeichnet, dass** die Rechnereinheit (1202) für das Vergleichen einer für einen Gegenstand (612) ermittelten Struktur oder einer für einen Gegenstand (612) ermittelten optischen Wirkung mit Sollwerten dient.

14. Verwendung eines gemäß einem der Ansprüche 7 bis 13 ausgebildeten Systems (1200) für die Qualitätsüberwachung in einer Brillenglas-Fertigungseinrichtung.

## Claims

1. Method for determining the spatial structure of an object, in particular a lens, e.g. a spectacle lens (612), a spectacle lens blank or a spectacle lens semifinished product, said object having a first optically effective surface (614) and a second optically effective surface (616),
comprising the following steps:
arranging the object (612) in a holding device (610, 810);
referencing the position of at least one point (P) on the first optically effective surface (614) and the position of at least one point (P') on the second optically effective surface (616) in a coordinate system (618, 818) that is location-fixed with respect to the holding device (610, 810);
ascertaining the topography of the first optically effective surface (614) of the object (612) in a coordinate system (659) that is referenced with respect to the coordinate system (618, 818) that is location-fixed with respect to the holding device (610, 810); and
calculating the spatial structure of the object (612) from the topography of the first optically effective surface (614) and from a data set concerning the topography of the second optically effective surface (616), said data set being referenced with respect to the location-fixed coordinate system (618, 818) of the holding device (610, 810),
**characterized in that**
the topography of the first optically effective surface (614) of the object (612) is ascertained in the coordinate system (659) that is referenced with respect to the holding device (610, 810) by means of light being provided from a multiplicity of point light sources (684, 684'), said light being reflected at the first optically effective surface (614), by means of a first brightness distribution being detected, which is brought about on an image sensor (678, 678') by the light of the point light sources (684, 684') that is reflected at the first optically effective surface (614), and by means of the topography of the first optically effective surface (614) being calculated from the position of the at least one point (P) on the first optically effective surface (614) of the object (612) and from the detected first brightness distribution in the coordinate system (659) that is referenced with respect to the holding device (610, 810).

2. Method for determining the location- and direction-dependent optical effect of an object, in particular a lens, e.g. a spectacle lens (612), a spectacle lens blank or a spectacle lens semifinished product, said object having a first optically effective surface (614) and a second optically effective surface (616),
**characterized by** the following steps:
determining the spatial structure of the object (612) by the method specified in Claim 1; and
calculating the location- and direction-dependent optical effect of the object (612) from the determined spatial structure of the object (612) by a ray tracing method.

3. The method according to Claim 1 or 2, **characterized in that** the data set concerning the topography of the second optically effective surface (616), said data set being referenced with respect to the location-fixed coordinate system (618, 818), is ascertained by means of light being provided from a multiplicity of point light sources (684, 684'), said light being reflected at the second optically effective surface (614), by means of a second brightness distribution being detected, which is brought about on an image sensor (678, 678') by the light of the point light sources (684, 684') that is reflected at the second optically effective surface (614), and by means of the topography of the second optically effective surface (616) being calculated from the position of the at least one point (P') on the second optically effective surface (616) of the object (612) and from the detected second brightness distribution in the coordinate system (618, 818) that is location-fixed with respect to the holding device (610, 810).

4. Method according to any of Claims 1 to 3, **characterized in that** for specifying the spatial structure of the object (612) in an object-fixed coordinate system (622), the coordinate system (618, 818) that is location-fixed with respect to the holding device (610, 810) is referenced with respect to an object-fixed coordinate system (622).

5. Method according to Claim 4, **characterized in that** the coordinate system (618, 818) that is location-fixed with respect to the holding device (610, 810) is referenced by ascertaining the position of a marking (628) fitted on the object (612) with respect to the object-fixed coordinate system (622).

6. Method according to any of Claims 1 to 5, **characterized in that** the position of the at least one point (P, P') on the first optically effective surface (614) or on the second optically effective surface (616) in a coordinate system (618, 818) that is location-fixed with respect to the holding device (610, 810) is ascertained by a thickness measurement of the object (612), and/or
**in that** for referencing the position of the at least one point (P, P') on the first optically effective surface (614) or the second optically effective surface (616) in a coordinate system (618, 818) that is location-fixed with respect to the holding device (610, 810), the object (612) is measured by a distance measuring device (670, 770) relative to the holding device, and/or
**in that** for referencing the position of the at least one point (P, P') on the first optically effective surface (614) or the second optically effective surface (616) in a coordinate system (818) that is location-fixed with respect to the holding device (810), the object (612) is accommodated at the at least one point (P) at a ball support (829) in the holding device (810).

7. System (600) for determining the spatial structure of an object, in particular a lens, e.g. a spectacle lens (612), a spectacle lens blank or a spectacle lens semifinished product, said object having a first optically effective surface (614) and a second optically effective surface (614),
comprising a holding device (610, 810) for the object (612);
comprising a measuring station (620, 820, 832, 932) for referencing the position of at least one point (P) on the first optically effective surface (614) and the position of at least one point (P') on the second optically effective surface (616) in a coordinate system that is location-fixed with respect to the holding device (610, 810);
wherein the measuring station is additionally designed for ascertaining the topography of the first optically effective surface (614) of the object (612) in a coordinate system (659) that is referenced with respect to the coordinate system (618, 818) that is location-fixed with respect to the holding device (610, 810);
or
comprising a further measuring station (632, 832, 932, 1032) for ascertaining the topography of the first optically effective surface (614) of the object (612) in a coordinate system (659) that is referenced with respect to the coordinate system (618, 818) that is location-fixed with respect to the holding device (610, 810);
and
comprising a computer unit for calculating the spatial structure of the object (612) from the topography of the first optically effective surface (614) and from a data set concerning the topography of the second optically effective surface (616), said data set being referenced with respect to the location-fixed coordinate system (618, 818) of the holding device (610, 810),
**characterized in that**
the measuring station (832, 932) or the further measuring station (632, 832, 932, 1032) has a multiplicity of point light sources (684, 684') that provide light which is reflected at the optically effective surface (614, 616) to be measured of an object (612) arranged in the accommodating region;
wherein the measuring station (832, 932) or the further measuring station (632, 832, 932, 1032) contains at least one camera (690, 690') for detecting a brightness distribution that is brought about on an image sensor (678, 678') by the light of the point light sources (684, 684') that is reflected at the optically effective surface (614, 616), to be measured;
and wherein the computer unit (602) is designed for calculating the topography of the first optically effective surface (614) from the position of the at least one point (P) on the first optically effective surface (614) of the object (612) and from the detected brightness distribution in the coordinate system (659) that is referenced with respect to the holding device (610, 810).

8. System according to Claim 7, **characterized in that** the measuring station (1032) or the further measuring station (1032) is also designed for measuring the topography of the second optically effective surface (616) of the object (612) in order to provide a data set concerning the topography of the second optically effective surface (616) of the object (612).

9. System according to either of Claims 7 and 8, **characterized in that** the holding device (610, 810) is designed for arranging the object (612) in an accommodating region of the measuring station (832, 932) or the further measuring station (632, 832, 932, 1032), wherein the position of at least one point (P) on the first optically effective surface (614) and of at least one point (P') on the second optically effective surface (616) of the object (612) in a coordinate system that is location-fixed with respect to the holding device (610, 810) can be determined in the holding device (610, 810).

10. System according to Claim 9, **characterized in that** the holding device (810) with an object (612) accommodated therein is arrangeable in the measuring station (832, 932) or the further measuring station (632, 832, 932, 1032) in a first position, in which the first optically effective surface (614) of the object (612) faces the camera (690), and in a second position, which is different than the first position and in which the first optically effective surface (614) of the object (612) faces away from the camera (690).

11. System according to any of Claims 7 to 10, **characterized by** means (654, 656, 658) for referencing a coordinate system (618) that is location-fixed with respect to the holding device (610) with respect to a coordinate system (659) that is location-fixed with respect to the measuring station (632, 832, 932, 1032).

12. System according to any of Claims 1 to 11, **characterized in that** the measuring station (832, 932) or the further measuring station (932, 1032) has a camera (690) for detecting the position of a marking (628) arranged on the object (612) in a coordinate system (659) that is location-fixed with respect to the measuring station (632, 832, 932, 1032) or the further measuring station (932, 1032); and/or
**in that** the computer unit (1202) contains a computer program that calculates a location- and/or direction-dependent optical effect of the object from the topography of the first optically effective surface (614) and from the data set concerning the topography of the second optically effective surface (616) taking account of a refractive index of the object; and/or
**in that** a displacement unit for feeding an object to be measured into the measuring station or the further measuring station and for transporting away an object to be measured in the measuring station or the further measuring station is provided.

13. System (1200) according to any of Claims 7 to 12, **characterized in that** the computer unit (1202) serves for comparing a structure determined for an object (612) or an optical effect determined for an object (612) with desired values.

14. Use of a system (1200) embodied according to any of Claims 7 to 13 for quality surveillance in a spectacle lens manufacturing device.

## Revendications

1. Procédé pour déterminer la structure spatiale d'un objet, en particulier d'une lentille, par exemple d'un verre de lunettes (612), d'une ébauche de verre de lunettes ou d'un verre de lunettes semi-fini qui présente une première surface optiquement efficace (614) et une seconde surface optiquement efficace (616),
comportant les étapes suivantes :
disposer l'objet (612) dans un dispositif de maintien (610, 810) ;
référencer la position d'au moins un point (P) sur la première surface optiquement efficace (614) et la position d'au moins un point (P') sur la seconde surface optiquement efficace (616) dans un système de coordonnées (618, 818) fixe par rapport au dispositif de maintien (610, 810) ;
déterminer la topographie de la première surface optiquement efficace (614) de l'objet (612) dans un système de coordonnées (659) référencé au système de coordonnées (618, 818) fixe par rapport au dispositif de maintien (610, 810) ; et
calculer la structure spatiale de l'objet (612) à partir de la topographie de la première surface optiquement efficace (614) et d'un ensemble de données concernant la topographie de la seconde surface optiquement efficace (616) et référencé au système de coordonnées fixe (618, 818) du dispositif de maintien (610, 810),
**caractérisé en ce que** la topographie de la première surface optiquement efficace (614) de l'objet (612) est déterminée dans le système de coordonnées (659) référencé au dispositif de maintien (610, 810), en fournissant de la lumière provenant d'une pluralité de sources lumineuses ponctuelles (684, 684'), qui est réfléchie sur la première surface optiquement efficace (614), en détectant une première distribution de luminosité qui est provoquée sur un capteur d'image (678, 678') par la lumière provenant des sources lumineuses ponctuelles (684, 684') qui est réfléchie sur la première surface optiquement efficace (614), et en calculant la topographie de la première surface optiquement efficace (614) à partir de la position dudit au moins un point (P) sur la première surface optiquement efficace (614) de l'objet (612) et à partir de la première distribution de luminosité détectée dans le système de coordonnées (659) référencé au dispositif de maintien (610, 810).

2. Procédé pour déterminer l'effet optique dépendant de la position et de la direction d'un objet, en particulier d'une lentille, par exemple d'un verre de lunettes (612), d'une ébauche de verre de lunettes ou d'un verre de lunettes semi-fini, qui présente une première surface optiquement efficace (614) et une seconde surface optiquement efficace (616),
**caractérisé par** les étapes suivantes :
déterminer la structure spatiale de l'objet (612) par le procédé selon la revendication 1 ; et
calculer l'effet optique de l'objet (612) dépendant de la position et de la direction à partir de la structure spatiale déterminée de l'objet (612) en utilisant un procédé de tracé de rayons.

3. Procédé selon la revendication 1 ou 2, **caractérisé en ce que** l'ensemble de données référencé au système de coordonnées fixe (618, 818) concernant la topographie de la seconde surface optiquement efficace (616) est déterminé en fournissant de la lumière provenant d'une pluralité de sources lumineuses ponctuelles (684, 684'), qui est réfléchie sur la seconde surface optiquement efficace (616), en détectant une seconde distribution de luminosité qui est provoquée sur un capteur d'image (678, 678') par la lumière provenant des sources lumineuses ponctuelles (684, 684') qui est réfléchie sur la seconde surface optiquement efficace (616), et en calculant la topographie de la seconde surface optiquement efficace (616) à partir de la position dudit au moins un point (P') sur la seconde surface optiquement efficace (616) de l'objet (612) et à partir de la seconde distribution de luminosité détectée dans le système de coordonnées (618, 818) fixe par rapport au dispositif de maintien (610, 810).

4. Procédé selon l'une des revendications 1 à 3, **caractérisé en ce que**, pour indiquer la structure spatiale de l'objet (612) dans un système de coordonnées (622) fixe par rapport à l'objet, le système de coordonnées (618, 818) fixe par rapport au dispositif de maintien (610, 810) est référencé à un système de coordonnées (622) fixe par rapport à l'objet.

5. Procédé selon la revendication 4, **caractérisé en ce que** le système de coordonnées (618, 818) fixe par rapport au dispositif de maintien (610, 810) est référencé au système de coordonnées (622) fixe par rapport à l'objet en déterminant la position d'un repère (628) placé sur l'objet (612).

6. Procédé selon l'une des revendications 1 à 5, **caractérisé en ce que** la position dudit au moins un point (P, P') sur la première surface optiquement efficace (614) ou sur la seconde surface optiquement efficace (616) dans un système de coordonnées (618, 818) fixe par rapport à un dispositif de maintien (610, 810) est déterminée par une mesure d'épaisseur de l'objet (612) ; et/ou
**en ce que**, pour référencer la position dudit au moins un point (P, P') sur la première surface optiquement efficace (614) ou la seconde surface optiquement efficace (616) dans un système de coordonnées (618, 818) fixe par rapport au dispositif de maintien (610, 810), l'objet (612) est mesuré par un dispositif de mesure de distance (670, 770) par rapport au dispositif de maintien ; et/ou **en ce que**, pour référencer la position dudit au moins un point (P, P') sur la première surface optiquement efficace (614) ou la seconde surface optiquement efficace (616) dans un système de coordonnées (818) fixe par rapport au dispositif de maintien (810), l'objet (612) est reçu audit au moins un point (P) sur un roulement à billes (839) dans le dispositif de maintien (810).

7. Système (600) pour déterminer la structure spatiale d'un objet, en particulier d'une lentille, par exemple d'un verre de lunettes (612), d'une ébauche de verre de lunettes ou d'un verre semi-fini de lunettes qui présente une première surface optiquement efficace (614) et une seconde surface optiquement efficace (614), comportant un dispositif de maintien (610, 810) de l'objet (612) ; un poste de mesure (620, 820, 832, 932) permettant de référencer la position d'au moins un point (P) sur la première surface optiquement efficace (614) et la position d'au moins un point (P') sur la seconde surface optiquement efficace (616) dans un système de coordonnées fixe par rapport au dispositif de maintien (610, 810) ; dans lequel le poste de mesure (832, 932) est en outre conçu pour déterminer la topographie de la première surface optiquement efficace (614) de l'objet (612) dans un système de coordonnées (659) référencé au système de coordonnées (618, 818) fixe par rapport au dispositif de maintien (610, 810) ;
ou un autre poste de mesure (632, 832, 932, 1032) permettant de déterminer la topographie de la première surface optiquement efficace (614) de l'objet (612) dans un système de coordonnées (659) référencé au système de coordonnées (618, 818) fixe par rapport au dispositif de maintien (610, 810) ;
et une unité de calcul permettant de calculer la structure spatiale de l'objet (612) à partir de la topographie de la première surface optiquement efficace (614) et à partir d'un ensemble de données concernant la topographie de la seconde surface optiquement efficace (616) et référencé au système de coordonnées fixe (618, 818) du dispositif de maintien (610, 810),
**caractérisé en ce que** le poste de mesure (832, 932) ou l'autre poste de mesure (632, 832, 932, 1032) comporte une pluralité de sources lumineuses ponctuelles (684, 684') fournissant une lumière qui est réfléchie sur la première surface optiquement efficace (614, 616) à mesurer d'un objet (612) disposé dans la zone de réception ;
dans lequel le poste de mesure (832, 932) ou l'autre poste de mesure (632, 832, 932, 1032) contient au moins une caméra (690, 690') permettant de détecter une distribution de luminosité provoquée sur un capteur d'image (678, 678') par la lumière provenant des sources lumineuses ponctuelles (684, 684') et réfléchie sur la première surface optiquement efficace (614, 616) à mesurer ;
et dans lequel l'unité de calcul (602) est conçue pour calculer la topographie de la première surface optiquement efficace (614) à partir de la position dudit au moins un point (P) sur la première surface optiquement efficace (614) de l'objet (612) et à partir de la distribution de luminosité détectée dans le système de coordonnées (659) référencé au dispositif de maintien (610, 810).

8. Système selon la revendication 7, **caractérisé en ce que** le poste de mesure (1032) ou l'autre poste de mesure (1032) est également conçu pour mesurer la topographie de la seconde surface optiquement efficace (616) de l'objet (612) afin de fournir un ensemble de données concernant la topographie de la seconde surface optiquement efficace (616) de l'objet (612).

9. Système selon l'une des revendications 7 ou 8, **caractérisé en ce que** le dispositif de maintien (610, 810) est conçu pour disposer l'objet (612) dans une zone de réception du poste de mesure (832, 932) ou de l'autre poste de mesure (632, 832, 932, 1032), dans lequel, dans le dispositif de maintien (610, 810), la position d'au moins un point (P) sur la première surface optiquement efficace (614) et d'au moins un point (P') sur la seconde surface optiquement efficace (616) de l'objet (612) peut être déterminée dans un système de coordonnées fixe par rapport au dispositif de maintien (610, 810).

10. Système selon la revendication 9, **caractérisé en ce que** le dispositif de maintien (810) dans lequel est reçu un objet (612) peut être disposé dans le poste de mesure (832, 932) ou l'autre poste de mesure (632, 832, 932, 1032) à une première position à laquelle la première surface optiquement efficace (614) de l'objet (612) est tournée vers la caméra (690), et à une seconde position, différente de la première position, à laquelle la première surface optiquement efficace (614) de l'objet (612) est tournée à l'opposé de la caméra (690).

11. Système selon l'une des revendications 7 à 10, **caractérisé par** des moyens (654, 656, 658) permettant de référencer un système de coordonnées (618) fixe par rapport au dispositif de maintien (610), à un système de coordonnées (659) fixe par rapport au poste de mesure (632, 832, 932, 1032).

12. Système selon l'une des revendications 1 à 11, **caractérisé en ce que** le poste de mesure (832, 932) ou l'autre poste de mesure (932, 1032) contient une caméra (690) permettant de détecter la position d'un repère (628) disposé sur l'objet (612) dans un système de coordonnées (659) fixe par rapport au poste de mesure (632, 832, 932, 1032) ou à l'autre poste de mesure (932, 1032) ; et/ou
**en ce que** l'unité de calcul (1202) contient un programme informatique qui calcule un effet optique dépendant de la position et/ou de la direction de l'objet à partir de la topographie de la première surface optiquement efficace (614) et à partir de l'ensemble de données concernant la topographie de la seconde surface optiquement efficace (616) en tenant compte d'un indice de réfraction de l'objet ; et/ou
**en ce qu'**il est prévu une unité de déplacement destinée à acheminer un objet à mesurer vers le poste de mesure ou l'autre poste de mesure et à transporter un objet à mesurer dans le poste de mesure ou l'autre poste de mesure.

13. Système (1200) selon l'une des revendications 7 à 12, **caractérisé en ce que** l'unité de calcul (1202) sert à comparer une structure déterminée pour un objet (612) ou un effet optique déterminé pour un objet (612) avec des valeurs de consigne.

14. Utilisation d'un système (1200) réalisé selon l'une des revendications 7 à 13 pour effectuer un contrôle de qualité dans un appareil de fabrication de verres de lunettes.
